(19) Europäisches Patentamt
European Patent Office
Office européen des brevets

(11) **EP 2 620 904 A1**

(12) **EUROPEAN PATENT APPLICATION**

(43) Date of publication:
**31.07.2013 Bulletin 2013/31**

(51) Int Cl.:
**G06Q 30/02** *(2012.01)*

(21) Application number: **13151130.5**

(22) Date of filing: **14.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.01.2012 US 201213348999**

(71) Applicant: **Toluna USA, Inc.
Wilton, CT 06897 (US)**

(72) Inventors:
• **SMADJA, Frank
34951 HAIFA (IL)**

• **ALUSH, Royi
52503 RAMAT GAN (IL)**
• **BABILA, Dvir
49493 PETAH TIKVA (IL)**
• **GOLAN, Shimon
32922 HAIFA (IL)**
• **PETIT, Frederic Charles
1190 Bruxelles (BE)**
• **WEINGARTEN, Tomer
49240 PETAH TIKVA (IL)**

(74) Representative: **Bongiovanni, Simone et al
Studio Torta S.p.A.
Via Viotti, 9
10121 Torino (IT)**

(54) **Virtual-to-real good/service system based on user participation or drawing**

(57) Exemplary embodiments are directed to determining an availability of an actual good and/or service based on activity of or with respect to a virtual icon on one or more webpages. The virtual icon can represent the actual good and/or service. The activity of or with respect to the virtual icon on the webpage(s) can be monitored and a determination of whether a conversion criteria has been satisfied can be made based on the monitored activity. The availability of the actual good or service can be based on satisfaction of the conversion criteria. In an alternative exemplary embodiment, a method of determining an availability of an actual good and/or service is provided based on a value of or with respect to a virtual icon on one or more webpages. The value of or with respect to the virtual icon on the webpage(s) can be compared to a value criteria to determine whether a value criteria has been satisfied.

**FIG. 2**

EP 2 620 904 A1

**Description**

TECHNICAL FIELD

The present disclosure relates to web-based systems and methods for rewarding users with an actual good/ service through, *inter alia*, electronically determining whether a conversion criteria has been satisfied for a virtual good/ service. The present disclosure further relates to web-based systems and methods that permit an administrator/user to establish applicable conversion criteria based, e.g., on the value of an item/service to be awarded upon satisfaction of the applicable conversion criteria.

BACKGROUND

Businesses generate exposure using various marketing techniques, including targeted advertising, promotions, discounts, sweepstakes, giveaways, and the like. With the introduction of mainstream social networking sites, such as Facebook and LinkedIn, businesses are looking to these social networks as a way to reach large numbers of people to increase their brand recognition and/or to create a "buzz" around their business, services and/or products that they produce/deliver. Propagation of information between connected users in a social network provides a valuable avenue for businesses. For example, individuals can post information that is disseminated to users in their network (e.g., Facebook friends, LinkedIn contacts, etc.), who in turn can repost or further disseminate the information to users in their network. Through such viral propagation, businesses are able to generate significant brand awareness and/or additional business activity at limited expense. In an effort to benefit from this new media, businesses are interested in developing fun and effective approaches to improve dissemination of information using these information distribution channels.

SUMMARY

In one aspect, a method and system for determining whether an actual good or service has been earned is disclosed. The method/system includes electronically monitoring activity of or with respect to a virtual icon on one or more webpages, and determining whether a conversion criteria has been satisfied based on the activity. The applicable conversion criteria for such good/service is predetermined through interaction with the disclosed system/method. The actual good or service corresponding to the virtual icon is earned based on satisfaction of the conversion criteria.
In another aspect, a computer-implemented system for determining whether an actual good or service has been earned is disclosed. The system includes a computer storage device and a processing device. The computer storage device stores information related to at least one of an activity of or with respect to a virtual icon on one or more websites, and a conversion criteria associated with the virtual icon. The processing device monitors the activity of or with respect to the virtual icon on the one or more webpages, and determines whether a conversion criteria has been satisfied based on the activity. An actual good or service corresponding to the virtual icon is earned based on satisfaction of the conversion criteria.
In yet another aspect, a non-transitory computer readable medium storing instructions is disclosed. Execution of the instructions by a processing device causes the processing device to implement a method that includes monitoring activity of or with respect to a virtual icon on one or more webpages, and determining whether a conversion criteria has been satisfied based on the activity. An actual good or service corresponding to the virtual icon is earned based on satisfaction of the conversion criteria.
In exemplary embodiments, the activity associated with satisfaction of the conversion criteria may be a vote for the virtual icon by a visitor to a website and/or a quantity of time that the virtual icon has been enabled. A remuneration of virtual currency may be required before the vote is applied to the conversion criteria. Virtual currency may be earned through other activities that are monitored and stored by the disclosed system/method. The virtual icon can be a widget having a count parameter, which can correspond to a quantity of votes the widget has received, and an elapsed time parameter, which can correspond to a quantity of time the widget has been active. A determination that the conversion criteria has been satisfied can be performed by comparing the count parameter and/or the elapsed time parameter to the conversion criteria, which can include a threshold quantity of votes to be received by the widget and/or elapsed time threshold. The conversion criteria can include a threshold quantity of votes to be received by the widget and/or a threshold quantity of time the widget has been available for voting. An entity can be informed that the conversion criteria has been satisfied and/or that the actual good or service is available. A delivery request to send the actual good or service to the entity can be initiated based on satisfaction of the conversion criteria.
In exemplary embodiments, a virtual marketplace that includes the virtual good/service icon can be provided and a virtual currency value can be associated with the virtual good/service icon. Various activities may be established for earning virtual currency that may be utilized with respect to the virtual icon, and such activities may be monitored and stored by the disclosed system/method. The virtual icon can be provided to an entity for inclusion on a webpage in response to receipt of an amount of virtual currency that is equal to the virtual currency value.

In an alternative exemplary embodiment of the present disclosure, a method and system for determining whether an actual good or service has been earned is disclosed. The method/system includes electronically comparing a value associated with a virtual icon included on at least one webpage and determining whether a conversion criteria has been satisfied based on a random event. The method/system further includes an actual good or service corresponding to the virtual icon which may be earned based on satisfaction of the conversion criteria. The conversion criteria is determined by the virtual icon parameters and a probability that a random event will occur that satisfies the conversion criteria.

In yet another alternative exemplary embodiment, a method and system for determining an availability of an actual good or service is presented. The method/system includes assigning a conversion criteria to a virtual icon to be placed on at least one webpage. The conversion criteria may be associated with a probability of a specific outcome occurring in response to a random event, e.g., a drawing/selection of a random number within a predetermined range. The method/system further includes determining whether the conversion criteria has been satisfied based on whether the specific outcome has occurred and determining. The probability of the specified outcome occurring may be increased when the conversion criteria has not been satisfied and may be decreased when the conversion criteria has been satisfied. An actual good or service corresponding to the virtual icon may be earned based on satisfaction of the conversion criteria.

Other objects and features will become apparent from the following detailed description considered in conjunction with the accompanying drawings. It is to be understood, however, that the drawings are designed as an illustration only and not as a definition of the limits of the invention.

BRIEF DESCRIPTION OF THE DRAWINGS

Figure 1 is an exemplary virtual-to-real system implemented in accordance with the present disclosure.

Figure 2 is a block diagram of an exemplary computing device configured to implement embodiments of a virtual-to-real system.

Figure 3 is a computing system for implementing embodiments of a virtual-to-real system.

Figure 4 is a flowchart illustrating an exemplary process performed using embodiments of a virtual-to-real system.

Figure 5 is an exemplary graphical user interface for implementing an aspect of an embodiment of a virtual-to-real system.

Figure 6 is an exemplary graphical user interface for implementing an aspect of an embodiment of a virtual-to-real system.

Figure 7 is an exemplary webpage incorporating a virtual good/service icon.

Figure 8 is an alternative exemplary virtual-to-real system implemented in accordance with the present disclosure.

Figure 9 shows a graph of an output of a step function used for determining a priority value of a priority parameter.

Figure 10 is a flowchart illustrating an alternative exemplary process performed using embodiments of a virtual-to-real system.

Figure 11 is an exemplary graphical user interface for implementing an aspect of an embodiment of a virtual-to-real system.

Figure 12 is an exemplary graphical user interface for implementing an aspect of an embodiment of a virtual-to-real system.

Figure 13 is an exemplary graphical user interface for implementing an aspect of an embodiment of a virtual-to-real system.

Figure 14 is an exemplary graphical user interface for earning points in an embodiment of a virtual-to-real system.

Figure 15 is an exemplary graphical user interface for selecting a recipient in an embodiment of a virtual-to-real system.

Figure 16 is an exemplary graphical user interface for a recipient webpage in an embodiment of a virtual-to-real system.

Figure 17 is an exemplary graphical user interface for a redemption webpage in an embodiment of a virtual-to-real system.

Figure 18 is an exemplary graphical user interface for a winning notification in an embodiment of a virtual-to-real system.

Figure 19 is an exemplary graphical user interface for a winning notification in an embodiment of a virtual-to-real system.

Figure 20 is an exemplary graphical user interface for a losing notification in an embodiment of a virtual-to-real system.

Figure 21 is an exemplary graphical user interface for a losing notification in an embodiment of a virtual-to-real system.

## DESCRIPTION OF EXEMPLARY EMBODIMENTS

Exemplary embodiments of the present disclosure are directed to determining whether an actual good or service has been earned in an online environment based on conversion criteria associated with a virtual good or service icon corresponding to the actual good or service. In exemplary embodiments, a virtual good/service icon can be obtained by an entity in exchange for a quantity of virtual currency. An entity can be an individual, a group, an organization, and the like. The virtual good/service icon can be placed or incorporated onto one or more web pages by the entity (and by multiple entities). For example, in exemplary embodiments, the virtual good/service icon can be incorporated into the entity's personal website, blog, Facebook wall or news stream, LinkedIn profile page, the entity's Toluna.com profile page, and the like.

In exemplary embodiments, the virtual good/service icon can be an active widget that can be clicked on by individuals that view one or more of the web pages on which the virtual good/service icon is incorporated. A click on the virtual good/service can represent a vote towards making the virtual good/service real for the entity (i.e., earning the actual good/service represented by the virtual good/service icon for the entity).

In other exemplary embodiments, the virtual good/service icon is a graphic provided to an entity to represent that the entity has purchased the virtual good/service icon. Optionally, the virtual good/service icon can include an embedded hyperlink that can be clicked on by an individual viewing the icon on a web page to lead the individual to a location where an individual may purchase their own virtual good/service icon for an opportunity to the actual good/service associated with the virtual good/service icon.

Conversion criteria can be associated with the virtual good/service icon to determine when the entity has earned the actual good/service represented by the virtual good/service icon. For example, upon satisfaction of the conversion criteria, the actual good/service can be made available to the entity. In some embodiments, the conversion criteria can be based on a quantity of votes and/or a quantity of time that has passed since the virtual icon was obtained by the entity. In some embodiments, the conversion criteria can be based on a probability that a particular outcome will result from a random event, such as the selection of a number from a range of numbers. For embodiments in which the conversion criteria is based on a probability, the odds of satisfying the conversion criteria can be increased/decreased based on a quantity of virtual icons that have been distributed, whether the conversion criteria has previously been satisfied, and/or whether there has been a winner on a previous outcome of the random event.

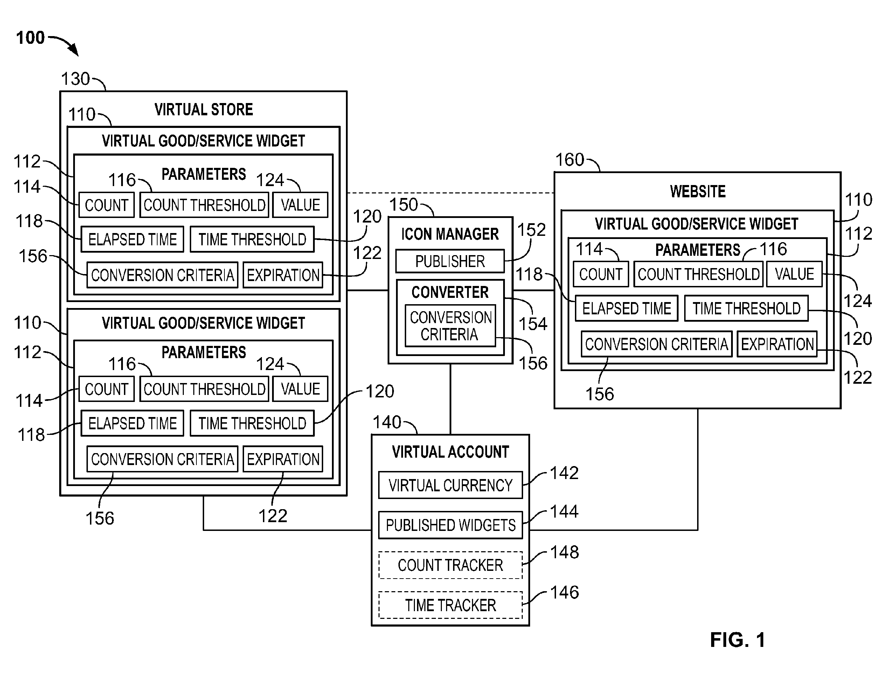

Figure 1 shows a block diagram of an exemplary virtual real system 100 (hereinafter "system 100"). In exemplary embodiments, the system 100 can include a virtual store 130, a virtual account 140, an icon manager 150, and one or more web pages 160. In some embodiments, one or more websites can interface with the system 100. The system 100 can be implemented to allow entities to obtain a virtual good/service icon that can be displayed on the web pages 160 (e.g., an entity's webpage, a Facebook page, a blog page, and the like) in exchange for a virtual currency. Once the entity has included the virtual good/service icon on a webpage, visitors to the webpage can vote for the virtual icon, for example, by clicking on the virtual good/service icon and/or can obtain an instance of the virtual good/service icon by selecting the icon. After a conversion criteria has been satisfied, for example a threshold quantity of votes has been reached and/or a specified time period has elapsed, the system 100 can inform the entity and/or one or more of the visitors that the conversion criteria has been satisfied and that in return for satisfying the conversion criteria an actual good/service corresponding to the virtual icon will be provided to one or more participants (e.g., the entities and/or visitors).

In exemplary embodiments, an entity can give or donate the virtual icon to another entity, such that the virtual icon is associated with the other entity. For example, an individual can decide to donate the virtual icon to a Facebook friend to give the friend an opportunity to earn the actual good or service represented by the virtual icon. In doing so, the donating entity no longer has an opportunity to earn the actual good or services for the virtual icon. An entity can donate a virtual icon at anytime before the icon expires. For example, the entity can own the icon and receive votes on the icon, and can subsequently donate the icon. The votes accumulated can also be transferred with the virtual icon so that the vote count is not reset when the virtual icon has been donated. In some embodiments, in order to receive the virtual icon, the receiving party must perform a task, such as opening registering or opening an account with the organization sponsoring the virtual icon.

In the present embodiment, the virtual good/service icons can be implemented as virtual good/service widgets 110 (hereinafter "widgets 110"). In exemplary embodiments, a widget can refer to an element that can be configured to perform an operation and/or maintain parameters associated with an operation of the widget, and can include a graphical user interface (GUI). As one example, a widget can be implemented as a button graphic that can be selected by a user. The selection of the button graphic by the user can cause the widget to perform an operation, such as updating one or more of the widget parameters and/or initiating network communication with a server or other device communicatively coupled to the device on which the widget is displayed. As another example, a widget can be implemented as a selectable image or text having an embedded hyperlink, where selection of the image results in activation of the link. Instances of the widget 110 can be embedded, placed, included, inserted, posted, or otherwise incorporated into or onto one or more web pages. A widget can be enabled or active when it is obtained from the virtual store 130 and/or when an instance of the widget is incorporated into a webpage. The widgets 110 can include one or more parameters 112 defining an operation and/or characteristic of the widget 110. For example, the parameters can include a count parameter 114, a threshold count value 116, an elapsed time parameter 118, an elapsed time threshold 120, an expiration parameter 122, and virtual value 124.

The count parameter 114 and the threshold count parameter 116 can be used when determining whether an entity qualifies for an actual good or service that corresponds to the widget. The count parameter 114 can provide a record of the number of votes a widget has received (e.g., a number of times the widget was clicked on). For example, each time a widget is selected, the count parameter 114 can be incremented to identify a cumulative number of votes for the widget. The count threshold parameter 116 can be a specified and/or determined value corresponding to a quantity of votes of the widget. As one example, the count threshold parameter can correspond to a quantity of votes required before the entity and/or a visitor that voted for the widget can be eligible for an actual good or service represented by the widget.

The elapsed time parameter 118 and the threshold elapsed time parameter 120 can be used when determining when an entity qualifies for an actual good or service that corresponds to the widget. The elapsed time parameter 118 can provide a record of the time that has elapsed since the widget has been active or enabled. The elapsed time threshold 120 can be a specified and/or determined value corresponding to a desired quantity of time has elapsed before an actual good or service represented by the widget is earned.

The expiration parameter 122 can be specified so that the widget 110 expires after a specified time period. As one example, the widget 110 can be set to expire after being active or enabled for a specified period of time. As another example, the widget 110 can expire if a predetermined quantity of time elapses between votes for the widget exceeds a specified period of time. Expiration of a widget can deactivate the widget so that conversion from the virtual good or service represented by the widget to an actual good or service is no longer possible.

The virtual value 124 can represent a quantity of virtual currency required to obtain the widget and/or an actual value of the goods or services represented by the widget. For example, the virtual value can be 3000 points, such as Facebook credits or Toluna points. The actual value of the goods or services can be for example a U.S. dollar amount, such as twenty-five dollars ($25.00 USD).

The virtual store 130 can provide a graphical user interface 132 to implement a virtual marketplace that includes one or more widgets 110 that can be obtained by one or more entities. The virtual store 130 can permit an entity to obtain one or more of the widgets 110 in exchange for a virtual currency. The virtual currency can be, for example, points, rewards, credits, or other schemes. As one example, the virtual currency can be Facebook credits. An entity can receive virtual currency, for example, by performing or participating in one or more task, such as opening an account, referring others to open account, responding to inquires about the entity, responding to surveys, purchasing the virtual currency, and the like.

The graphical user interface 132 can provide an organized environment through which the entity can browse to locate widgets 110 of interest to the entity. For example, the graphical user interface 132 can organize the widgets by good or service classifications, expiration dates, virtual value, actual value of a good or service associated with the widget 110, and the like. In exemplary embodiments, the graphical user interface 132 can provide a search operation that allows the entity to search for widgets 110 of interest.

The virtual store 130 can include a description of the actual goods or services corresponding to each widget. For example, a widget having a graphic of a cow can be associated with an actual or real stuffed cow having a manufacturer's suggested retail value and a specific model number, which can be provided to the entity. The availability of certain widgets 110 in the virtual store 130 can be limited to a certain quantity. As one example, a predefined quantity of a particularly widget can be specified based on, for example, the quantity of actual goods or services corresponding the widget that are available.

As one example, a widget can correspond to a pair of flip-flops having a manufacturer's suggested retail price (MSRP) for the flip-flops is twenty-five U.S. dollars ($25.00 USD). The virtual icon can be a graphic of the flip-flops and can have a virtual cost of about 3000 points such that 125 points is approximately equivalent to one U.S. dollar ($1.00 USD). The virtual cost of a vote can be set to 30 points so that in order for an entity and the last user to vote for the virtual icon can each earn the pair of flip-flops after 200 votes or 6000 points have been accumulated. In some embodiments, if an entity places instances of the same widget on different web pages, each instance can contribute cumulatively to the total number of votes required to earn the actual good or service. In some embodiments, when an entity obtains a virtual icon in exchange for a quantity of virtual currency, the entity can be limited to one instance of the virtual icon.

The virtual account 140 can be associated with the entity and can maintain the entities virtual currency 142, as well as a record 144 of the widgets 110 that the entity has obtained. In exemplary embodiments, the virtual account can track quantity of votes received by the entity's widgets, a quantity of time the entity's widgets have been active, and/or whether a conversion criteria for a widget has been satisfied. For example, when an entity obtains a widget from the virtual store 130, the icon manager or the virtual store 130 can update the entity's account to include a reference to the widget and an elapsed time tracker 148 can be initiated to track the quantity of time that the widget has been active. When the widget is incorporated into a webpage and is voted on by a visitor, the widget can communicate with the virtual account 140, for example, via the icon manager 150, to update a count tracker 146 associated with the widget to track a cumulative quantity of votes received by the widget. Once the widget has received a quantity of votes that satisfies the count threshold parameter and/or the quantity of time that has elapsed since the widget was activated satisfies the elapsed time threshold parameter, the conversion criteria can be satisfied and a message can be placed in the entity's account and/or e-mailed to the entity to inform the entity that the conversion criteria has been satisfied and that the actual good and/or service corresponding to the widget has been earned.

The icon manager 150 can manage and/or generate widgets for the virtual store 130 and/or can monitor widget activity of widgets that have been obtained by entities from the virtual store 130. In exemplary embodiments, the icon manager 150 provide an interface between an entity and the virtual store 130 and/or can control when an entity earns an actual good or service represented by a widget incorporated into the entities webpage. The entity can interact directly or indirectly with the virtual store 130. The icon manager 150 can include a publisher 152 and a converter 154.

The publisher 152 can be used to create new widgets for inclusion in the virtual store 130 and/or can control distribution of widgets from the virtual store 130 to entities. As one example, when an offering party wishes to offer a good or service, the offering party can use the publisher 152 to generate a widget to represent the good or service, can define parameters for the widget, can define conversion criteria to be satisfied before the actual good or service is made available, can determine a virtual currency value for the widget, and the like. As another example, when an entity wishes to obtain a widget from the virtual store 130, the publisher 152 can provide an interface between the virtual store 130 and the entity. The publisher 152 can activate the widget, for example, by assigning the widget a time stamp to indicate the date and time the widget was activated by the publisher 152.

The converter 154 can monitor or track activated widgets to determine whether a conversion criteria 156 has been satisfied for each activated widget. For example, widgets can be configured to communicate with the converter 154 when the widget receives a vote, when the widget expires, and/or can be configured to periodically communicate with the converter 154. In some embodiments, the conversion criteria 156 can be included in the widget parameters 112. In some embodiments, the converter 154 can receive widget parameters from an activated widget and can compare the parameters to the conversion criteria for that widget. In some embodiments, the converter 154 can maintain a record of widget parameters for each activated widget. The converter 154 can update the record based on information received from the widget, which can include, for example, the widget parameters and/or a message that a vote was received by the widget, and can compare the record to the conversion criteria to determine whether the conversion criteria has been satisfied. In such embodiments, the widget can send a message to the converter 154 indicating a vote was received without sending the widget parameters. The converter 154 can also receive the activation time stamp from the publisher 152 as well as the expiration parameter associated with the widget so that the converter 154 can determine whether the widget has expired.

In exemplary embodiments, an internet protocol (IP) address, media access control (MAC) address, internet cookie and/or email address of the entity and each voter can be recorded by the widget 110 and/or the system 100 (e.g., the icon manager 150 can record the IP and/or MAC addresses). The IP address, MAC address, internet cookie and/or email address can be used by the system 100 to control the voting process, e.g., by recognizing each voter and/or preventing duplication or fraud. As one example, the system can allow a single vote from an IP address, MAC address, internet cookie and/or email address to prevent receiving multiple votes from the same IP address, MAC address, internet cookie and/or email address to make it more difficult to earn the actual good/service.

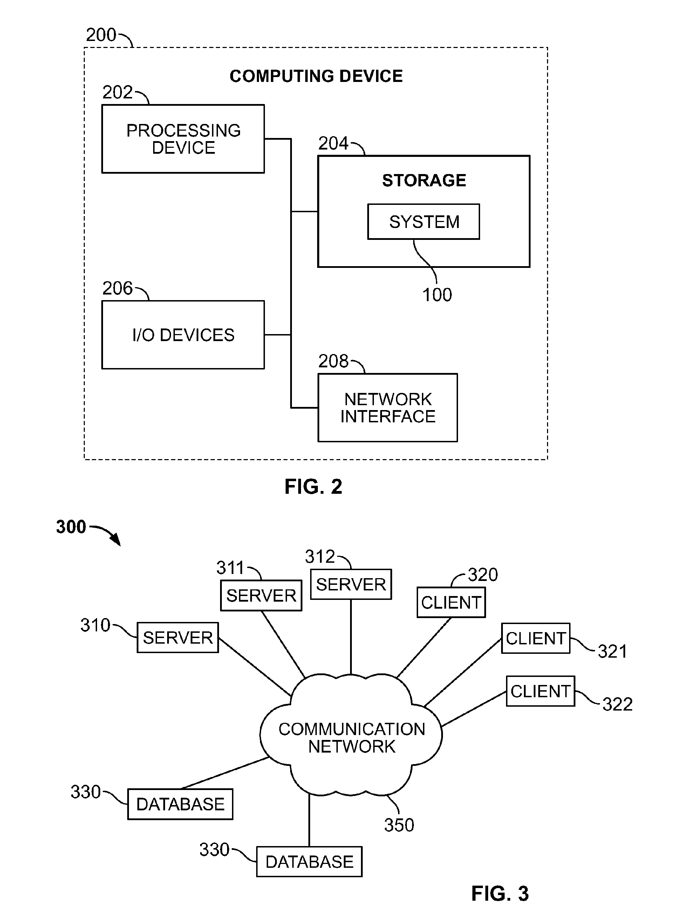

Figure 2 is a block diagram of an exemplary computing device 200 configured to implement some embodiments of the system 100. The computing device 200 can be a mainframe, personal computer (PC), laptop computer, workstation, server, handheld device, such as a portable digital assistant (PDA), and the like. In the illustrated embodiment, the computing device 200 includes a processing device 202, such as a central processing unit, and can include storage 204. The computing device 200 can further include input/output devices 206, such as a display device, keyboard, touch screen, mouse, printer, and the like, and can include a network interface 208 to facilitate communication between the computing device 200 and other devices communicative coupled to a network.

The storage 204 stores data and instructions and can be implemented using non-transitory computer readable medium technologies, such as a floppy drive, hard drive, tape drive, solid state storage devices, Flash drive, optical drive, read only memory (ROM), random access memory (RAM), and the like. For example, the storage 204 can store widgets, widget parameters, virtual account information, entity information, conversion criteria, and the like. Applications, such as an embodiment of the system 100, or portions thereof, can be resident in the storage 204 and can include instructions for implementing the applications. The storage 204 can be local or remote to the computing device 200. The processing device 202 operates to execute the applications in storage 204, such as the system 100, by executing instructions therein and storing data resulting from the executed instructions, which may be presented via, for example, a graphical user interface (GUI).

Figure 3 is a block diagram of an exemplary computing system 300 configured to implement one or more embodiments of the system 100. The computing system 300 includes servers 310-314 operatively coupled to clients 320-324, via a communication network 350, which can be any network over which information can be transmitted between devices communicatively coupled to the network. For example, the communication network 350 can be the Internet, Intranet, virtual private network (VPN), wide area network (WAN), local area network (LAN), and the like. The computing system 300 can include repositories or database devices 330, which can be operatively coupled to the servers 310-314, as well as to clients 320-324, via the communications network 350. The servers 310-314, clients 320-324, and database devices 330 can be implemented as computing devices. Those skilled in the art will recognize that the database devices 330 can be incorporated into one or more of the servers 310-314 such that one or more of the servers can include databases.

In exemplary embodiments, the system 100 can be distributed among different devices (e.g., servers, clients, databases) in the communication network 350 such that one or more components of the system 100, or portions thereof, can be implemented by different devices in the communication network 350. For example, in illustrative embodiments, the icon manager 150, or portions thereof, can be implemented by the server 310, the virtual store 130, or portions thereof, can be implemented by the server 311, and the webpage can be implemented by the server 312. For example, servers 311 and 312 can be web servers configured to host web pages. Client 320-322 can represent a computing device having a web browser, where the client 320 can be used by the entity to incorporate a widget onto the entity's webpage and the claims 321 and 322 can be used by visitors to navigate to web pages and vote for the widgets incorporated on the web pages. The database devices 330 can be configured to store widgets, widget parameters, virtual account information, entity information, conversion criteria, and the like.

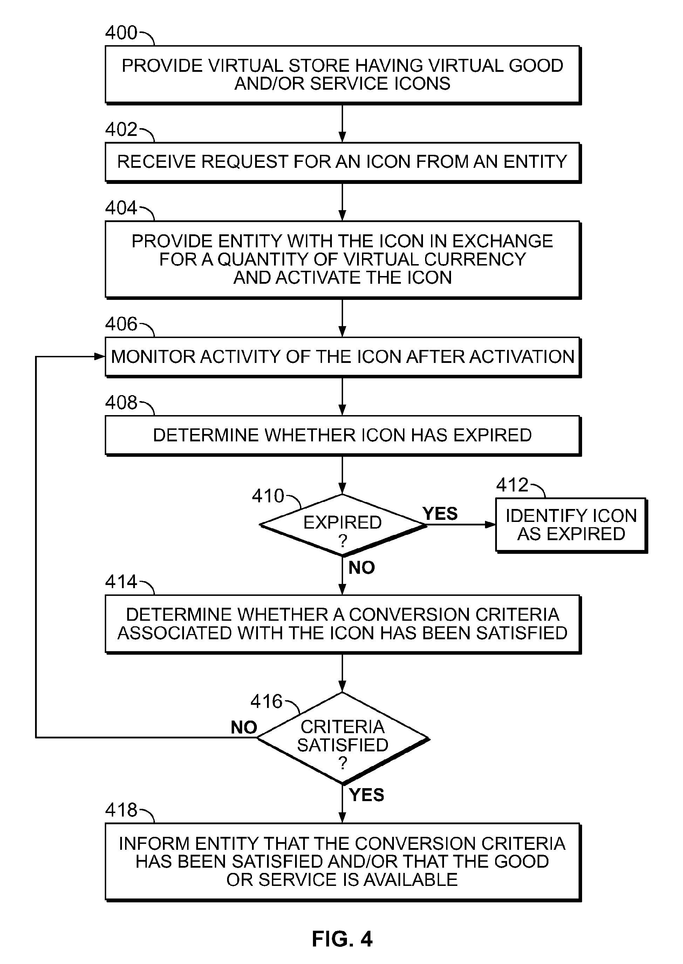

Figure 4 is a flowchart illustrating an exemplary process performed using the system 100. A virtual store can be provided that includes virtual good an/or service icons (400). The virtual icon can be retrieved by an entity in exchange for a quantity of virtual currency either directly or indirectly from the virtual store (402). The icon can be activated by the system before the entity receives the icon (404). Once the entity receives the icon, the icon can be incorporated into the entity's website. For example, the entity can include an instance of the virtual icon on their blog or social media page, such a Facebook page or LinkedIn profile, and the like. For embodiments in which the icon is included on the entity's social media page, a notification or update can be sent to the entity's connections (e.g., Facebook friends, LinkedIn contacts). The update can appear in, for example, an update or news page or stream on web pages of the entity's connections. The notification or update can include an instance of the virtual icon so that the connections can vote for the virtual icon without actually visiting the entity's web page and/or can obtain an instance of the virtual icon for inclusion on their web page. Vote for the icon can be cast by, for example, clicking on the icon. The system can monitor an activity of the icon after activation, for example, by communicating with the icon (406). For example, a quantity of votes received by the icon can be monitored and/or an quantity of time that has elapsed since the icon was activated can be monitored. The system can determine whether the icon has expired based on, for example, a quantity of time that has elapsed since the icon was activated (408). If the icon has expired (410), the icon is identified has being expired (412). Otherwise, the system can determine whether a conversion criteria has been satisfied for the icon (414). If the conversion criteria has been satisfied (416), the system can continue to monitor the icon (406). If the conversion criteria has been satisfied (416), the system can inform the entity, as well as the last user that voted for the virtual icon, that the conversion criteria has been satisfied and/or that the actual good or service corresponding the icon is available to the entity and the last user to vote on the icon (418).

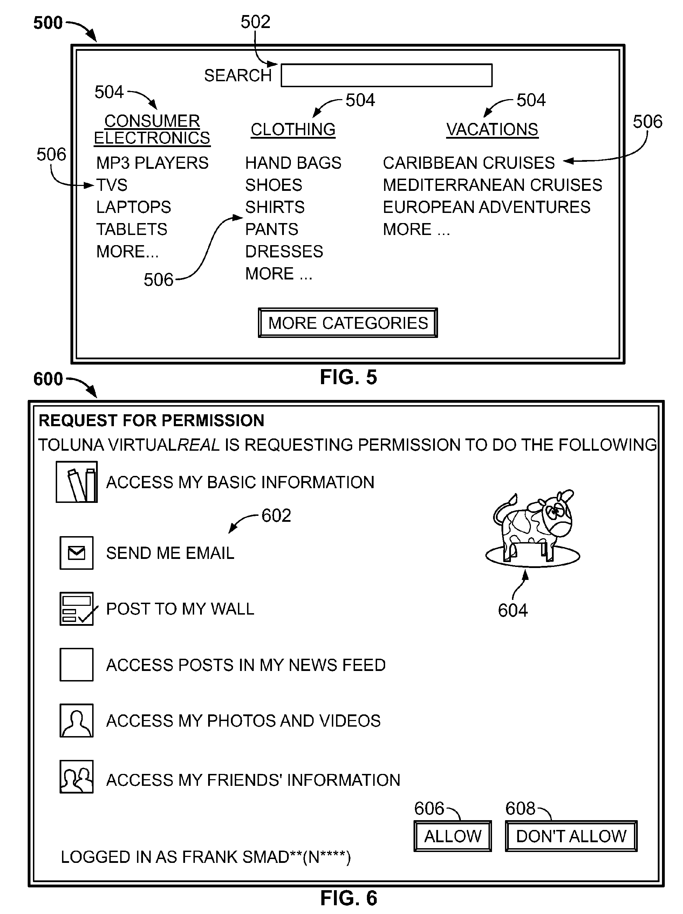

Figure 5 is an exemplary virtual store 130 that can be generated according to exemplary embodiments of the system 100. The virtual store 130 can include a search field 502, categories 504, and good/services 506. The search field 502 allows a user to search for icons (e.g., widgets) using key terms and/or categories. The categories can be used to sort the icons into groups of like goods/services. The goods/services 506 can be selectable to navigate to icons that can be obtained from the virtual store 130 by the entity.

Figure 6 is an exemplary graphical user interface (GUI) 600 that can be presented to a user by embodiments of the system 100 before an icon can be added to an entities webpage. The GUI 600 can define permissions 602 governing the interaction of the system 100, or a portion thereof, such as the icon manager 150, with the widget on the web page, and can include an image of the virtual icon 604 selected by the entity. To accept the conditions and receive the widget, the entity can select an "Allow" button 606 and the widget can be provided to the entity. If the entity does not agree with the conditions, the entity can select a "Don't Allow" button 608 and the widget is not provided to the entity. For example, the GUI 600 can request permission to access profile and other information about the entity from the entity's account associated with the web page, send e-mail to the entity, post status messages, updates, news, notes, photos/images, videos, widgets, and the like, on the entity's web page, access the entity's new feeds, access information related to the entity's connections (e.g., Facebook friends, LinkedIn contacts), and the like.

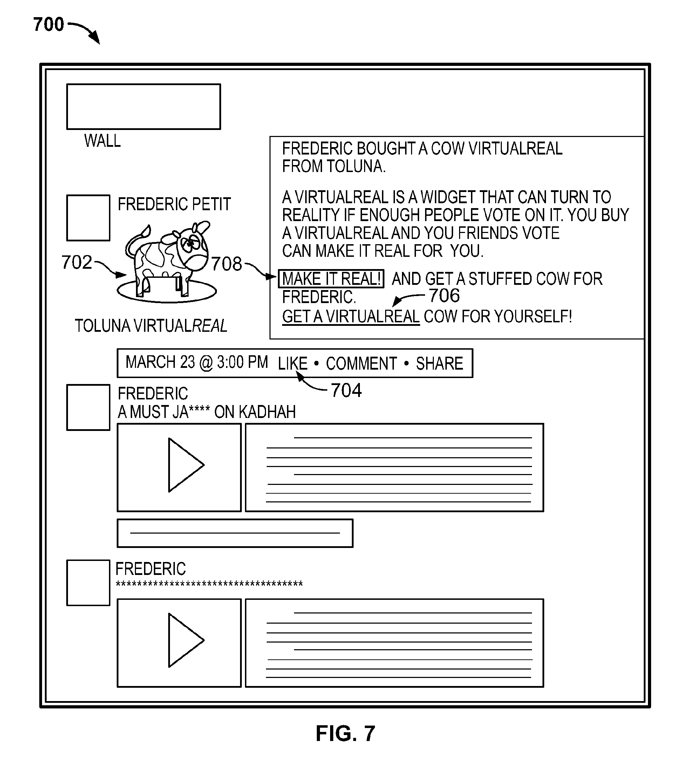

Figure 7 is an exemplary webpage 700 that includes a virtual good/service icon 702. In the present embodiment, the webpage 700 can be a person's Facebook page, wall, or stream. After the person has obtained the icon and has place posted the icon on the webpage 700, the webpage 700 can include a post indicating that the person just purchased a virtual icon for a quantity of virtual currency, and requesting the person's connections to help the person earn the actual good or service. The person's connections or "friends" can be notified that the entity has added an icon to the webpage 700 and that they can vote for the icon to "make it real" so that the entity can earn an actual good or service represented by the icon. For example, the person's friends can vote for the icon, for example, by selecting or clicking on the icon 702 and/or by clicking on a hyperlink associated with the icon, such as, for example, a "Like" button 704 or a "Make it Real" button 708. In some embodiments, the notification or update can be sent to the person's connections (e.g., Facebook friends, LinkedIn contacts). The update can appear in, for example, an update or news page or stream on web pages of the person's connections. The notification or update can include an instance of the virtual icon so that the entity's connections can vote for the virtual icon without actually visiting the webpage 700 and/or can obtain an instance of the virtual icon for inclusion on their web page. In some embodiments, a vote can be cast in exchange for a quantity of virtual currency. In some embodiments, the notification or update can include a hyperlink 706 that can be selected if the entity's connections want to obtain an instance of the icon for themselves for an opportunity to earn the actual good or service represented by the icon in exchange for a quantity of virtual currency.

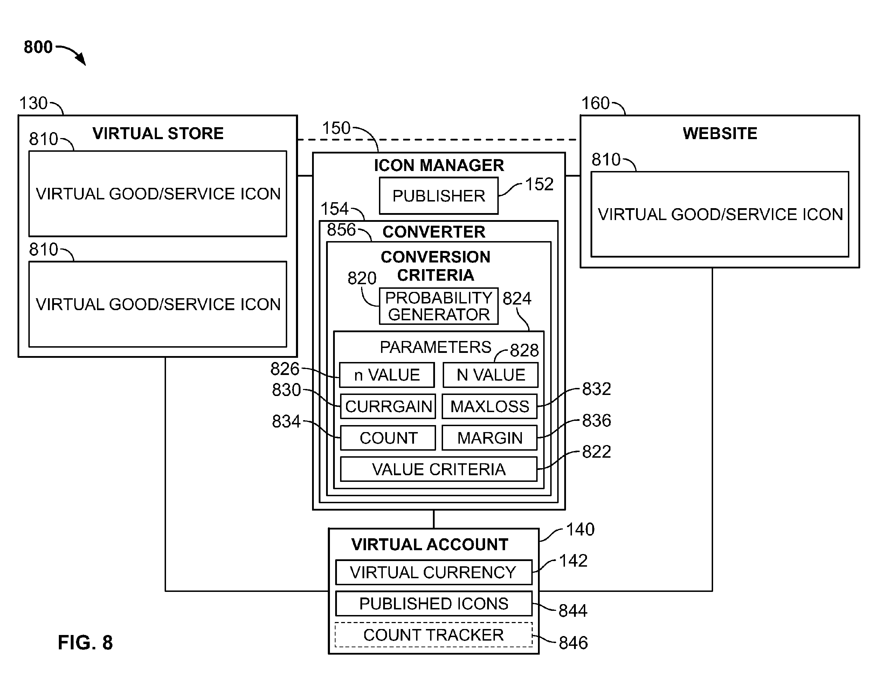

Turning to Figure 8, another exemplary virtual real system 800 (hereinafter "system 800") is illustrated. In exemplary embodiments, the system 800 can include the virtual store 130, the virtual account 140, the icon manager 150, and one or more web pages 160, which are substantially similar to the elements in system 100 as described above except for the distinctions described herein. The system 800 can be implemented to allow entities to obtain a virtual good/service icon 810 that can be displayed on the web pages 160 (e.g., an entity's web page, a Facebook page, a blog page, and the like) in exchange for virtual currency 142, e.g., Toluna points. Initially, the icon manager 150 can select a predetermined value and/or integer as the "winning" value and/or integer to be associated with the virtual good/service icon 810, i.e., the value criteria 822 of conversion criteria 856. The predetermined value can be within a range of values, which can be specified based on a value/cost of the actual and/or virtual good/service. Once the entity has included the virtual good/service icon 810 on a web page 160, a number can be randomly drawn/selected for the entity within the range of values, e.g., a random event. If the randomly drawn/selected number for the entity is equivalent to the predetermined value selected by the icon manager 150 as the "winning" value and/or integer, i.e., satisfaction of the conversion criteria 856 is achieved, the system 800 can inform the entity and/or one of more of the visitors to the web page 160 that the entity has won the drawing and that in return for winning the drawing, an actual good/service corresponding to the virtual icon will be provided to one or more participants, e.g., entities.

In exemplary embodiments, an entity can give or donate the virtual icon to another entity, such that the virtual icon is associated with the other entity. For example, an individual can decide to donate the virtual icon to a Facebook friend to give the friend an opportunity to earn the actual good or service represented by the virtual icon. In doing so, the donating entity no longer has an opportunity to earn the actual good or service for the virtual icon. An entity can donate a virtual icon at the time of purchase of the virtual icon, prior to the time of drawing/selecting the random value is made. Thus, upon making the donation, the randomly selected/drawn number becomes associated with the entity receiving the donation and thereby only the entity receiving the donation can earn the actual service or good. In some embodiments, in order to receive the virtual icon, the receiving party must perform a task, such as registering or opening an account with the organization sponsoring the virtual icon.

Still with reference to Figure 8, the conversion criteria 856 can include a probability generator 820 and parameters 824. Further, the parameters 824 can include a value criteria 822, an n value parameter 826, an N value parameter 828, a CurrGain value 830, a MaxLoss value 832, a count parameter 834, and a Margin value 836.

The n value parameter 826 is determined as the cost and/or quantity in virtual currency 142 and/or points of obtaining a single virtual good/service icon for an entity. For example, the n value parameter 826 can be 100 points, such as Facebook credits or Toluna points, and is generally a fraction of the N value parameter 828. The actual value representative of the n value parameter 826 value can be, for example, a U.S. dollar amount, such as one dollar ($1.00 USD). The N value parameter 828 represents the cost and/or quantity in virtual currency 142 and/or points of obtaining and delivering an actual or real good/service associated with the virtual good/service icon 810 to an entity who earns the actual or real good/service. For example, the N value parameter 828 can be 100,000 points, such as Facebook credits or Toluna points. The actual value of the good/service can be, for example, a U.S. dollar amount, such as twenty-five dollars ($25.00 USD). The CurrGain value 830 represents a current loss or gain value in virtual currency 142 and/or points for the virtual good/service at any point in time. For example, the CurrGain value 830 can start at N, i.e., the virtual currency value of the actual good/service, and can be updated for each vote and/or win by a user, e.g., each winning vote generally increases the CurrGain value 830 by the actual value of the good/service and each losing vote generally decreases the CurrGain value 830 by the point and/or virtual value of a vote. The CurrGain value 830 can start at n in order to reduce the chance of a first voter to win, which is generally desired when the actual value of the good/service is greater/more expensive than the point and/or virtual currency value of a vote. The MaxLoss value 832 represents the maximum loss for the virtual good/service icon 810 in virtual currency 142 and/or points that is permitted by the issuer of the virtual good/service icon 810. The count parameter 834 can determine the number of entities who have obtained the virtual good/service icon 810 on their web page 160 in order to assist in calculating the probability of an entity obtaining the actual or real good/service associated with the virtual good/service icon 810. The Margin value 836 represents the desired profit an organization/entity providing the actual good/service desires to make on an actual good/service and can be a percentage of the original cost of an actual good/service. For example, if an actual good/service has a value of about 1,000 points and the Margin value 836 is about 100%, the actual cost and/or value of the actual good/service will be about 2,000 points.

With respect to the virtual store 130, a virtual good/service icon 810 can correspond to a car having a manufacturer's suggested retail price (MSRP) of fifty thousand U.S. dollars ($50,000.00 USD). The virtual icon can be a graphic of a car and can have a virtual cost of about 100 points. In some embodiments, if an entity places instances of the same virtual good/service icon 810 on different web pages, each instance can increase the probability of obtaining the actual good/service and can provide the entity an additional opportunity of obtaining the actual good/service. In some embodiments, when an entity obtains a virtual icon in exchange for a quantity of virtual currency, the entity can be limited to one instance of the virtual icon.

The icon manager 150 can manage and/or generate virtual good/service icon 810 for the virtual store 130 and/or can monitor virtual good/service icon 810 activity that has been obtained by entities from the virtual store 130. In exemplary embodiments, the icon manager 150 provides an interface between an entity and the virtual store 130 and/or can control when an entity earns an actual good/service represented by a virtual good/service icon 810 incorporated into the entity's website 160. The entity can interact directly or indirectly with the virtual store 130. The icon manager 150 can include a publisher 152 and a converter 154, which are substantially similar to said elements of system 100, except for distinctions discussed herein.

The converter 154 can further include the conversion criteria 856 associated with each virtual good/service icon 810. In particular, the conversion criteria 856 includes a probability generator 820 and parameters 824 which include the value criteria 822, the n value parameter 826, the N value parameter 828, the CurrGain value 830, the MaxLoss value 832, the count parameter 834, and the Margin value 836. The converter 154 can electronically select a predetermined "winning" number, i.e., the conversion criteria 856, in the range between 1 and N/n for each virtual good/service icon 810, which will be assigned to the value criteria 822 for earning the actual good/service icon. The converter 154 can further randomly generate/draw a number between 1 and N/n for each entity obtaining a virtual good/service icon 810 and compare the value to the predetermined "winning" value, i.e., value criteria 822, to determine whether the conversion criteria 856 has been satisfied, e.g., determine whether a specified outcome has occurred in response to a random event.

The probability generator 820 can calculate the probability of an entity obtaining the actual or real good/service, i.e., satisfying the conversion criteria 856, based on the one or more parameters 824 and the hedge function described below, e.g., calculating the probability of a specified outcome occurring in response to a random event. With specific reference to the probability generator 820 depicted in Figure 8, as would be understood by a person skilled in the art, the probability of obtaining an actual or real good/service can be mathematically calculated by Equation 1 below:

$$p = \frac{n}{N} \tag{1}$$

where $p$ represents a probability value generated by the probability generator 820, n represents the n value parameter 826, and $N$ represents the N value parameter 828.

For example, if the virtual good/service icon 810 is a car worth $N$ = 600,000,000 virtual currency points and an entity can obtain a virtual good/service icon 810 for $n$ = 100 virtual currency points, the probability generator 820 results in a probability of about one hundred out of 600,000,000, more clearly represented as about one out of 6,000,000. Although the probability determined by the probability generator 820 can be appropriate for a less expensive actual good/service, e.g., pizza, one skilled in the art would appreciate that this probability creates a substantial risk to the entity providing the actual good/service of having to pay for the actual good/service prior to a sufficiently large amount of virtual currency being spent on the virtual good/service icon 810.

In exemplary embodiments, a hedge function for dynamically adapting the probability determined by the probability generator 820 can be used to reduce or cap the amount lost in providing an actual good/service. For example, the hedging function can be used to reduce the probability of obtaining the actual good/service during the initial period of entities obtaining the virtual good/service icon 810, and can be used to gradually increase the probability of obtaining the actual good/service when a large number of entities have obtained the virtual good/service icon 810. In particular, based on the parameters 824, the probability generator 820 can implement the step function of Equation 2 to generate a step value. As one example, the step function implemented by the probability generator 820 can be expressed mathematically as follows:

$$Step(x) = \frac{1}{1 + e^{-5x}} \qquad (2)$$

wherein $x$ is the input value.

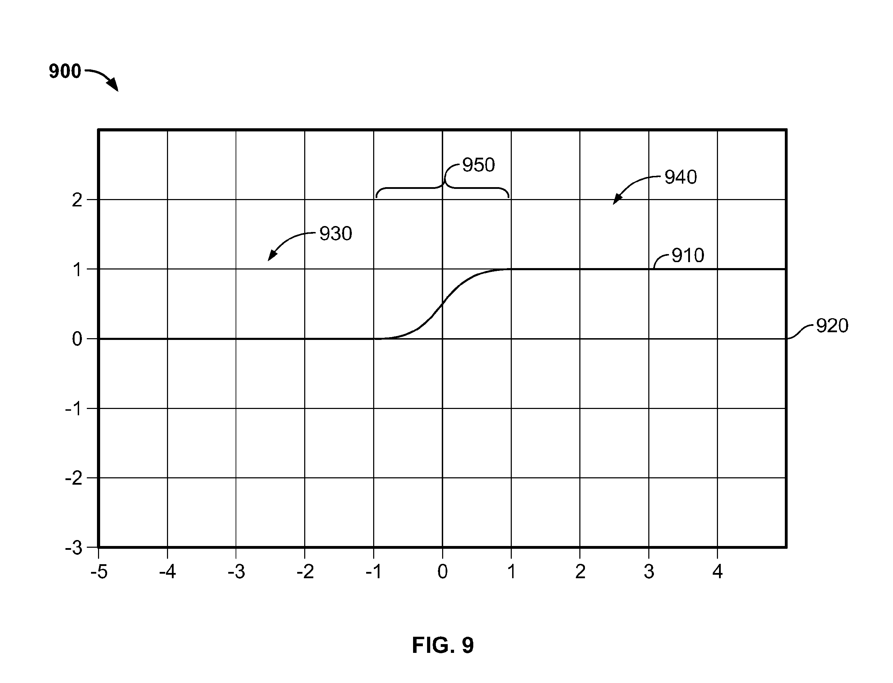

A plot 900 of an output 910 of the step function as a function of the input value 920 is shown in Figure 9. As can be seen from Figure 9, the output 910 of the step function can be divided into three value sections: a low value section 930, a transition value section 950, and a high value section 940. For input values that are less than about negative one, the output of the step function is in the low value section 930, which corresponds to an output value of zero in the present embodiment. For input values that are greater than one, the output of the step function is in the high value section 940, which corresponds to an output value of one in the present embodiment. For input values between about negative one and positive one, the output of the step function is in the transition section 950, which corresponds to an output value of between about zero and about one, depending on the input value. For example, for an input value of-1, the step function output is approximately equal to 0.007, and for an input value of 1, the step function output is approximately equal to 0.993. Thus, the step function of Equation 2 can be implemented as a hedging function to dynamically change the probability value generated by the probability generator 820 for an entity obtaining an actual good/service.

As discussed above with respect to Equation 2, the nominal probability for an entity to obtain an actual good/ service can be calculated as p = n/N. To simulate this, the converter 154 can generate and store a random number, i.e., value criteria 858 of conversion criteria 856, in the range of between 1 and N/n which represents a predetermined value for obtaining the specific actual good/service. After an entity obtains a virtual good/service icon 810 and incorporates it into its website 160, the converter 154 can randomly draw or select a number between 1 and N/n for the entity. If the randomly drawn or selected number for the entity is equal to the random number generated and stored by the converter 154, i.e., the conversion criteria 856 has been satisfied, the entity earns the actual good/service associated with the virtual good/service icon 810. If the randomly drawn or selected number for the entity is not equal to the random number generated and stored by the converter 154, i.e., the conversion criteria 856 has not been satisfied, the entity does not earn the actual good/service associated with the virtual good/service icon 810. However, as mentioned above, a potential problem with implementing a simple probability calculation of n/N is that if the actual good/service is, for example, a car, the entity issuing the actual good/service can be forced to buy several cars before any entity has spent a large enough amount of virtual currency. In particular, the probability that an entity will obtain the actual good/service is high prior to entities spending an amount of virtual currency equivalent to the actual value of the actual good/service to obtain the virtual good/service icon 810. In effect, this can result in a financial loss to the issuing entity. If the virtual good/service is of little actual value, e.g., a pizza, the high risk to the entity issuing the actual good/service and the high probability of obtaining the actual good/service may be acceptable. However, in the case of an actual good/service of high actual value, e.g., a car, the high probability rate and high risk can be unacceptable.

In order to minimize the high probability rate while still providing a fair chance for participating entities to earn an actual good/service, the hedging function can be implemented in conjunction with the step function of Equation 2 to hedge the potential losses for the entity issuing the actual good/service. In particular, the hedging function is a function of the CurrGain value 830 which aids in dynamically adapting the probability of obtaining an actual good/service, and can be mathematically represented as Equation 3 below:

$$hedge(CurrGain) = Step((CurrGain - Cost) / MaxLoss) \qquad (3)$$

wherein $Step$ represents the step function of Equation 2, $CurrGain$ represents the CurrGain value 830, $Cost$ represents the cost of buying and shipping the actual good/service plus a desired Margin value 836, and $MaxLoss$ represents the MaxLoss value 832. Specifically, $Cost$ can be mathematically shown by Equation 4 as:

$$Cost = N * (1 + Margin) \qquad (4)$$

wherein $N$ represents the N value parameter 828 and $Margin$ represents the Margin value 836.

Thus, combining the hedge function of Equation 3 in conjunction with the step function of Equation 2, the probability for an entity to earn an actual good/service associated with a virtual good/service icon 810, i.e., satisfying the conversion criteria 856, can be mathematically shown by Equation 5 below:

$$p(draw) = 2 * hedge(CurrGain) * \left( \frac{n}{Cost} \right) = \frac{2*n}{\left( Cost * \left( 1 + e^{-5\left( \frac{CurrGain-Cost}{MaxLoss} \right)} \right) \right)} \quad (5)$$

where *CurrGain* represents the CurrGain value 830, *n* represents the n value parameter 826, *Cost* represents the cost of buying and shipping the actual good/service plus a desired Margin value 836, and *MaxLoss* represents the MaxLoss value 832. It should be noted that (*CurrGain - Cost*) represents an estimation of a first loss, which can be useful in situations where the virtual good/service has a high actual value and thereby allows the issuing entity to reduce the chance of losing money spent on the actual good/service until a large amount of entities are participating and have obtained the specific virtual good/service icon 810. The hedge function of Equation 5 can result in a near zero probability that an actual good/service will be earned by a participating entity at the beginning of the draw when a small number of entities are participating and a small amount of virtual currency has been spent on the virtual good/service icon 810. In addition, the hedge function provides a higher probability that an actual good/service will be earned by a participating entity after a large number of drawings, e.g., random events, have occurred without any entities winning. To further clarify the implementation of the hedge function of Equation 5, examples are provided below.

In the situation where a virtual good/service has a high or expensive actual value, e.g., a car, the cost/value of the virtual good/service icon 810 can be n=100 (n value parameter 826), the total cost/value of purchasing and shipping the actual good/service associated with the virtual good/service icon 810 can be N=600,000,000 (N value parameter 828), the maximum loss in points and/or virtual currency which the entity issuing the actual good/service wishes to incur can be MaxLoss=3,000,000 (MaxLoss value 832), and the Margin value 836 can be equal to 0%, i.e., the entity providing the actual good/service will not incur benefits from the actual good/service. Equation 2, as discussed above, would yield a higher than desired probability of earning an actual good/service, i.e., about one out of 6,000,000. However, by implementing the hedging function of Equation 5, at the beginning of the draw, i.e., when a small number of entities are participating and have obtained a virtual good/service icon 810, e.g., about 100 entities, the probability of earning an actual good/service is at the lowest value and is less than about one out of $10^{100}$. Once a larger amount of entities are participating in the drawing and a large number of virtual good/service icons 810 specific to the drawing have been obtained, e.g., about 3,000,000 entities, the probability of earning an actual good/service will be increased to less than about one out of $10^{7}$. Further, once more than about 6,000,000 entities are participating in the drawing, i.e., have obtained a virtual good/service icon 810 specific to the drawing, the probability of earning an actual good/service can return to about the initial probability of about one out of 6,000,000. If the drawing, e.g., random event, for the actual good/service continues without an entity earning the actual good/service, the hedging function of Equation 5 can further increase the probability of earning the actual good/service in order to increase the chance of an entity earning the actual good/service. Therefore, if more than about 12,000,000 entities are participating in the drawing by obtaining a virtual good/service icon 810 and there has not been a "winning" entity, the probability for an entity to obtain an actual good/service can become about one out of 3,000,000. In general, for each "losing" draw, the CurrGain value 830 can be increased by the n value parameter 826 amount and for each "winning" draw, the CurrGain value 830 can be decreased by the N value parameter 828 amount. Thus, if the randomly selected number for each entity participating in the drawing does not result in a number matching the predetermined number selected by the converter 154, by adding the n value parameter 826 amount to the CurrGain value 830, the probability of earning the actual good/service will be slightly increased. Similarly, if an entity earns the actual good/service, by decreasing the CurrGain value 830 by the N value parameter 828, the probability of earning another actual good/service will be greatly decreased, thus preventing entities from continuously earning an actual good/service.

If the actual good/service is of lower actual cost/value, e.g., a pizza, the cost/value of the virtual good/service icon 810 can be n=10 (n value parameter 826), the total cost/value of purchasing and shipping the actual good/service associated with the virtual good/service icon 810 can be N=10,000 (N value parameter 828), the maximum loss in points and/or virtual currency which the entity issuing the actual good/service wishes to incur can be MaxLoss=3,000,000 (MaxLoss value 832), and the Margin value 836 can be equal to 0%, i.e., the entity providing the actual good/service will not incur benefits from the actual good/service.. Similar to prior calculations, Equation 2 yields a higher than desired probability of an entity earning the actual good/service of about one out of 1,000. However, the hedging function of Equation 5 provides that at the beginning of a draw, i.e., when a small number of entities, e.g., about 10 entities, are participating in the drawing by obtaining a virtual good/service icon 810 associated with the drawing, the probability of an entity earning an actual good/service will be about one out of 1,000. Once a larger amount of entities are participating in the drawing by obtaining a virtual good/service icon 810, e.g., about 3,000,000 entities, the probability of an entity earning an actual good/service will increase to about less than one out of 500. The probability of an entity earning an actual good/service will generally remain at about this value until a specific amount of entities has "won", i.e., satisfied the conversion criteria 856 and thereby earned an actual good/service. Similar to the example above, for each "losing" draw, the CurrGain value 830 can be increased by the n value parameter 826 amount and for each "winning" draw, the CurrGain value 830 can be decreased by the N value parameter 828 amount. Thus, if the randomly selected number for each entity participating in the drawing does not result in a number matching the predetermined number selected by the converter 154, by adding the n value parameter 826 amount to the CurrGain value 830, the probability of earning the actual good/service will be slightly increased. Similarly, if an entity earns the actual good/service, by decreasing the CurrGain value 830 by the N value parameter 828, the probability of earning another actual good/service will be greatly decreased, thus preventing entities from continuously earning an actual good/service.

As an alternative example of an actual good/service with a lower actual cost/value, e.g., a pizza, the cost/value of the virtual good/service icon 810 can be n=10 (n value parameter 826), the total cost/value of purchasing and shipping the actual good/service associated with the virtual good/service icon 810 can be N=10,000 (N value parameter 828), the maximum loss in points and/or virtual currency which the entity issuing the actual good/service wishes to incur can be MaxLoss=3,000,000 (MaxLoss value 832), and the Margin value 836 can be equal to 10%, i.e., the entity providing the actual good/service will incur benefits from the actual good/service. Similar to prior calculations, Equation 2 yields a higher than desired probability of an entity earning the actual good/service of about one out of 1,100. However, the hedging function of Equation 5 provides that at the beginning of a draw, i.e., when a small number of entities, e.g., about 10 entities, are participating in the drawing by obtaining a virtual good/service icon 810 associated with the drawing, the probability of an entity earning an actual good/service will be about one out of 1,100. Once a larger amount of entities are participating in the drawing by obtaining a virtual good/service icon 810, e.g., about 3,000,000 entities, the probability of an entity earning an actual good/service will increase to about less than one out of 500. The probability of an entity earning an actual good/service will generally remain at about this value until a specific amount of entities has "won", i.e., satisfied the conversion criteria 856 and thereby earned an actual good/service. Similar to the example above, for each "losing" draw, the CurrGain value 830 can be increased by the n value parameter 826 amount and for each "winning" draw, the CurrGain value 830 can be decreased by the N value parameter 828 amount. Thus, if the randomly selected number for each entity participating in the drawing does not result in a number matching the predetermined number selected by the converter 154, by adding the n value parameter 826 amount to the CurrGain value 830, the probability of earning the actual good/service will be slightly increased. Similarly, if an entity earns the actual good/service, by decreasing the CurrGain value 830 by the N value parameter 828, the probability of earning another actual good/service will be greatly decreased, thus preventing entities from continuously earning an actual good/service.

The virtual account 140 can be associated with the entity and can maintain the entity's virtual currency 142, as well as a published icons record 844 of the virtual good/service icons 810 that the entity has obtained. In exemplary embodiments, the virtual account 140 can track the quantity of virtual good/service icons 810 obtained by the entity which have been obtained by other entities through the count tracker 846. For example, when an entity obtains a virtual good/service icon 810 from the virtual store 130, the icon manager 150 or the virtual store 130 can update the entity's account to include a reference to the virtual good/service icon 810 and the total amount of entities who have obtained the virtual good/service icons 810. Initially, the converter 154 performs a random drawing and/or selection of a number between 1 and N/n and stores the number as the predetermined "winning" number, i.e., the conversion criteria which must be satisfied by an entity randomly drawing a number between 1 and N/n in order to earn an actual good/service associated with the virtual good/service icon 810. When the virtual good/service icons 810 is incorporated into a website 160 of an entity, a randomly drawn number between 1 and N/n is selected for the entity with respect to the specific virtual good/service icon 810. If the entity number and the predetermined "winning" number are not equal, i.e., the conversion criteria 856 has not been satisfied, the entity does not earn an actual good/service associated with its virtual good/service icon 810. However, if the entity number and the predetermined "winning" number are equal, i.e., the conversion criteria 856 has been satisfied, the entity earns an actual good/service associated with the virtual good/service icon 810 and a message can be placed in the entity's account and/or e-mailed to the entity to inform the entity that the entity has satisfied the conversion criteria 856 and that the actual good/service corresponding to the virtual good/service icon 810 has been earned.

Similar to the embodiment described above with respect to Figures 2-3 and 5-7, the system 800 can also include an internet protocol (IP) address and/or media access control (MAC) address of each entity which can be recorded by the virtual good/service icon 810 and/or the system 800 (e.g., the icon manager 150 can record the IP and/or MAC addresses). System 800 can also work in conjunction with the exemplary computing device 200, computing system 300, virtual store 130, graphical user interface (GUI) 600, and webpage 700. However, rather than implementing a voting functionality, the IP address, MAC address, computing device 200, computing system 300, virtual store 130, GUI 600, and webpage 700 embodiments associated with system 800 can be focused on and utilized for obtaining a virtual good/service icon 810, determining a conversion criteria 856 specific to the virtual good/service icon 810, determining a probability of an entity earning an actual good/service associated with the virtual good/service icon 810, monitoring the parameters 824 to ensure that the probability created by the hedging function is at the desired level, and determining whether a conversion criteria 856 has been satisfied by an entity.

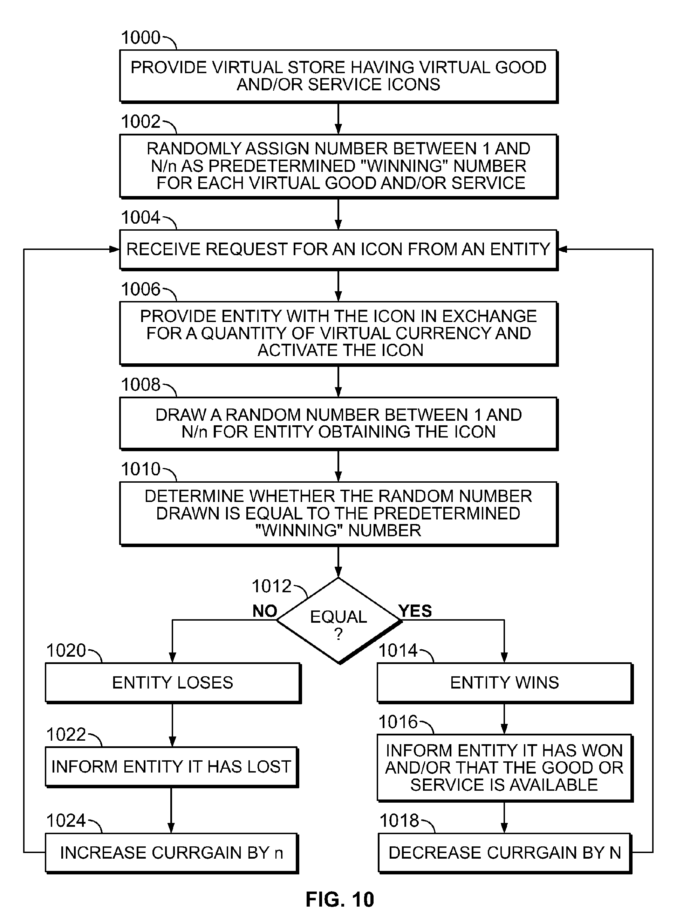

Turning now to Figure 10, a flowchart illustrating an exemplary process performed using the system 800 is provided. A virtual store can be provided that includes virtual good/service icons 810 (1000). In addition to the parameters 824 associated with each virtual good/service, the converter 154 shall randomly assign a number between 1 and N/n as a predetermined "winning" number for each virtual good/service, i.e., a conversion criteria 856 (1002). The system 800 can then receive a request for a virtual good/service icon 810 from an entity (1004). The virtual good/service icon 810 can be retrieved by an entity in exchange for a quantity of virtual currency either directly or indirectly from the virtual store (1006). The icon can be activated by the system 800 before the entity receives the icon (1006). Once the entity receives the icon, the icon can be incorporated into the entity's website. For example, the entity can include an instance of the virtual icon on their blog or social media page, such as a Facebook page or LinkedIn profile, and the like. For embodiments in which the icon is included on the entity's social media page, a notification or update can be send to the entity's connections (e.g., Facebook friends or LinkedIn contacts). The update can appear in, for example, an update or news page or stream on web pages of the entity's connections. The notification or update can include an instance of the virtual icon so that the connections can obtain an instance of the virtual icon for inclusion on their web page, thereby increasing the probability of earning an actual/good service associated with the virtual icon. Once a virtual good/service icon 810 has been activated by the system 800, a randomly drawn and/or selected number between 1 and N/n is determined for the entity obtaining the virtual good/service icon 810 (1008). The system 800 can then compare the randomly drawn entity number to the predetermined "winning" number associated with the virtual good/service icon 810, i.e., the conversion criteria 856 (1010 and 1012). If the numbers drawn are equal, the entity has satisfied the conversion criteria 856 and earns an actual good/service associated with the virtual good/service icon 810, i.e., the entity wins (1014). The system 800 can then inform the entity that the drawing has resulted in a "winning" number being drawn for the entity, i.e., the entity satisfied the conversion criteria 856, and that the actual good/service corresponding to the virtual good/service icon 810 is available to the entity (1016). The system 800 can then decrease the CurrGain value 830 by the N value parameter 828 amount in order to decrease the probability of an entity earning another actual good/ service, thereby hedging losses to the entity issuing the actual good/service. In contrast, if the number drawn in step 1008 is not equal to the predetermined "winning" number, i.e., the conversion criteria 856 has not been satisfied, the entity does not earn an actual good/service, i.e., the entity loses (1020). Thus, the system 800 can inform the entity that the drawing has resulted in a "losing" number being drawn for the entity, i.e., the entity has not satisfied the conversion criteria 856, and that the entity has not earned the actual good/service (1022). The system 800 can then increase the CurrGain value 830 by the n value parameter 826 amount, thereby slightly increasing the probability of an entity earning an actual good/service.

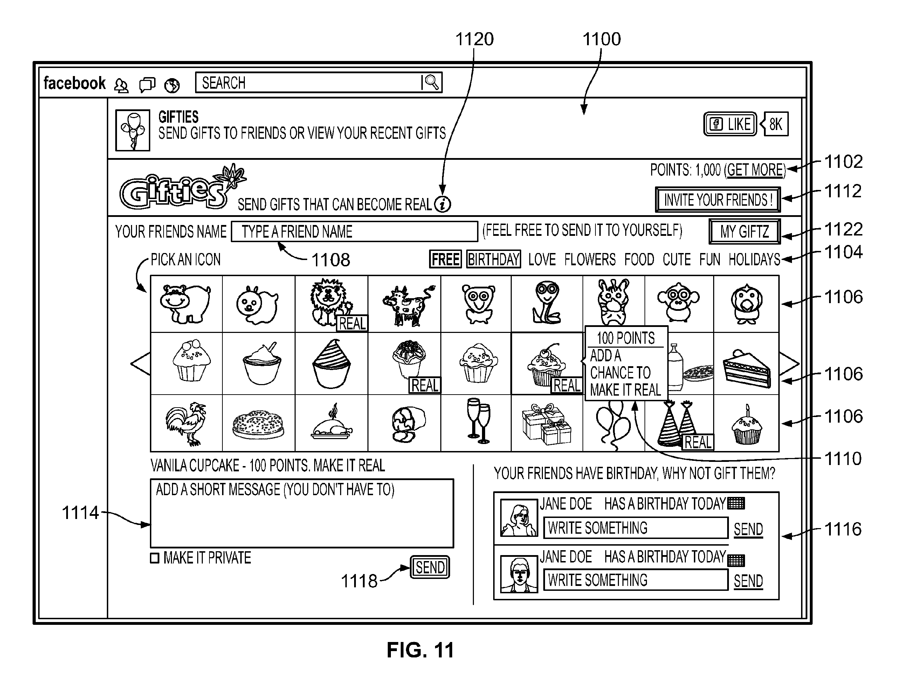

Figure 11 is an exemplary virtual store 130 (shown as 1100 in Figure 11) that can be generated according to exemplary embodiments of the system 800. Although depicted on a Facebook page, it should be understood that the exemplary virtual store 130 can be generated on any user webpage discussed herein and can be the default view when a user enters the virtual store 130. The virtual store 130, e.g., the gift selection screen, can include a point balance field 1102, categories 1104, goods/services 1106, and a recipient selection field 1108. The point balance field 1102 allows a user to determine the total amount of virtual currency, e.g., Facebook credits, Toluna points, or the like, available to the user for obtaining a virtual good/service. The point balance field 1102 can further include a "get more" hyperlink to direct a user to an "earn points" webpage for obtaining additional virtual currency for, e.g., obtaining a virtual good/ service which has a value greater than the current amount of virtual currency possessed by the user. The categories 1104, e.g., free, popular, featured, recent, birthday, love, flowers, food, cute, fun, holidays or the like, can be used to sort the virtual good/service icons into groups of similar goods/services. The default category 1104 can generally be the "popular" category 1104, although a different category 1104 can be selected. The virtual goods/services 1106 can be hovered over for a virtual good/service display 1110 to appear with detailed information about the virtual good/service 1106 such as, e.g., the virtual currency price, a label indicating that the virtual good/service is eligible to become real, and the like. In addition, the recipient selection field 1108 of the virtual store 130 prompts the user to select a recipient, e.g., a Facebook friend, the user, or the like, to whom the virtual good/service 1106 will be sent.

The exemplary virtual store 130 can further include an "invite your friends" button 1112 which permits a user to invite more friends, e.g., Facebook friends, to participate in the system 800, a message textbox 1114 to add a personal message when sending the virtual good/service 1106 and having an option to make the message and virtual good/ service 1106 private to other users, a birthday notification box 1116 for alerting the user of friends, e.g., Facebook friends, who have a birthday that day, and a send button 1118 for sending the virtual good/service 1106 to the recipient selected. Clicking the send button 1118 can, e.g., validate the virtual good/service 1106 selected, whether the user has sufficient virtual currency to obtain the selected virtual good/service 1106, whether at least one recipient has been selected, and the like. If any of the validations performed fail, the user can be alerted accordingly with an appropriate message. Similarly, the user can select a virtual good/service 1106, add a personal message and send the virtual good/service 1106 by utilizing the birthday notification box 1116, which in turn also performs the validation steps discussed above. The virtual store 130 can optionally include a name header with the user image, a "like" button for indicating that the user likes the system 800, an information field 1120 which can explain the system 800 further when actuated by the user, and a my webpage button 1122 for directing the user to the user's personal webpage in the system 800. Once a user has sent a virtual good/service 1106 from the virtual store 130, the point balance field 1102 can be updated by indicating a reduced point balance based on the virtual good/service 1106 virtual currency value and a message alert can be sent to the user to indicate that the virtual good/service 1106 has been sent successfully.

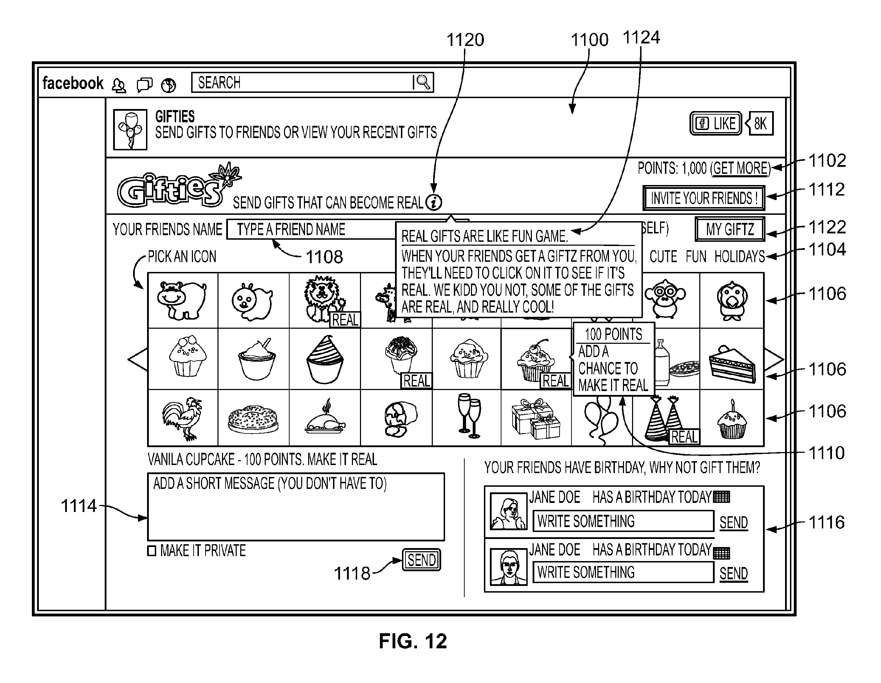

Turning now to Figure 12, the exemplary virtual store 130 is illustrated with the information field 1120 actuated by the user. In particular, when actuated, the information field 1120 provides a message 1124 explaining the system 800 such as, e.g., what a user can do with the virtual good/service 1106, how the virtual good/service 1106 can become real, or the like.

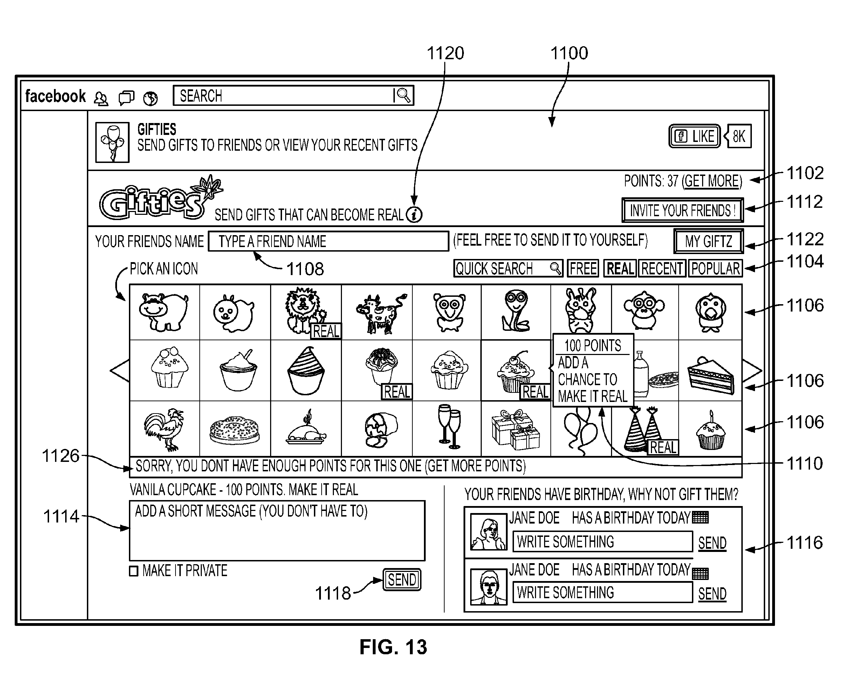

With respect to Figure 13, the exemplary virtual store 130 is illustrated with the point balance field 1102 at a value below the virtual currency value of the virtual good/service 1106 selected. In particular, the virtual good/service display 1110 indicates that the virtual good/service 1106 selected has a virtual currency value of 100 points. When the point balance field 1102 indicates a value below the virtual currency value of the virtual good/service 1106 selected, e.g., 37 points is insufficient to obtain the 100 point virtual good/service 1106 selected, the system 800 can provide a point insufficiency message 1126 to indicate that the user does not have a sufficient point balance to obtain the virtual good/service 1106 selected. A "get more" hyperlink similar to that of the point balance field 1102 can further appear in the point insufficiency message 1126 to direct the user to an earn points webpage 1200 as discussed below.

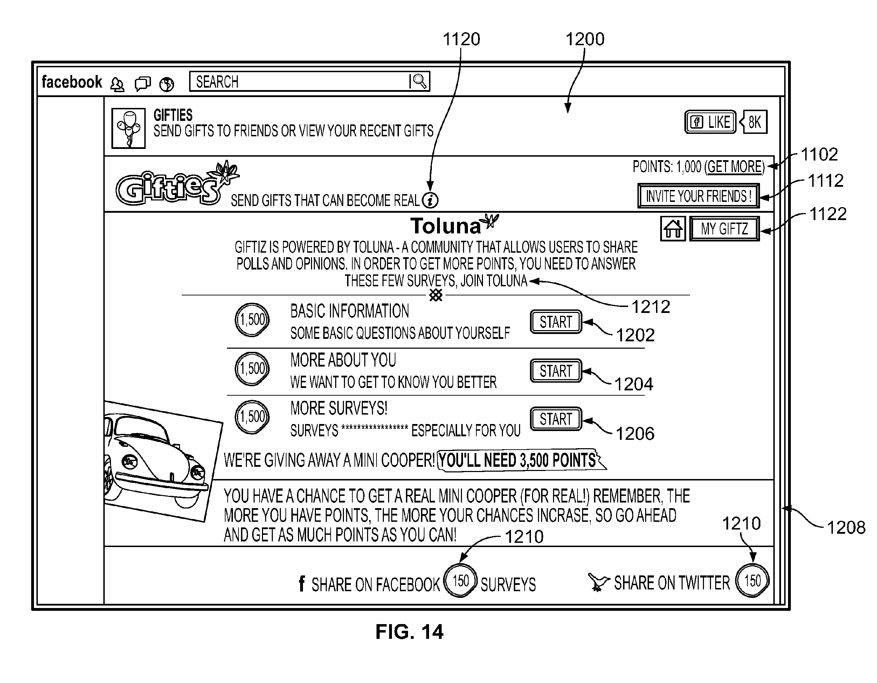

In particular, with respect to the point balance field 1102 and/or the point insufficiency message 1126, when a user actuates the "get more" hyperlink from the virtual store 130, the user can be directed to an exemplary earn points webpage 1200 as depicted in Figure 14. When viewing the earn points webpage 1200, instead of the "get more" hyperlink, the point balance field 1102 can optionally include a "go back" hyperlink for directing the user back to the virtual store 130. The earn points webpage 1200 allows a user to earn additional virtual currency and can include, e.g., a basic registration 1202 option, a more about you 1204 option, a surveys 1206 option, or the like. The basic registration 1202 option can be enabled if the user has not completed the registration previously. In particular, selecting the basic registration 1202 option can initiate a survey collecting demographic information about the user, e.g., gender, age, first name, last name, address, education, income, ethnicity, or the like. Once a user has completed the basic registration 1202 survey, a predetermined amount of virtual currency can be awarded to the user, the point balance field 1102 can be updated in real time by including the new virtual currency awarded, and the additional options, e.g., the more about you 1204 and surveys 1206 options, can be enabled. It should be noted that a user can generally only complete the basic registration 1202 survey once in order to earn the predetermined about of virtual currency.

Still with reference to Figure 14, after the user has completed the basic registration 1202 survey, the more about you 1204 and surveys 1206 options can be enabled. Actuating the more about you 1204 option, the user can be directed to a new webpage, e.g., a Toluna profiles page, including interest-type surveys to collect additional information about the user's interests and/or more detailed demographic information. Similarly, upon actuating the surveys 1206 option, the user can be directed to a new webpage, e.g., a Toluna survey center page, where a user can select surveys to complete to gain additional virtual currency. For each interest-type survey, e.g., profile, and/or general survey the user completes, a predetermined amount of virtual currency can be awarded to the user and the user can be notified by the system 800 that by refreshing the webpage, the point balance field 1102 can be updated to reflect the newly awarded virtual currency.

The exemplary earn points page 1200 can further include a special gift 1208 promotion, e.g., a car, vacation trip, or the like, with a noted virtual currency value required to obtain the special gift 1208, i.e., a virtual good/service 1106, and a hyperlink for sending the special gift 1208. The hyperlink can direct the user to the virtual good store 130 with the special gift 1208 preselected as the virtual good/service 1106 to be sent to a recipient. The earn points page 1200 can also include a "join" hyperlink 1212 for directing the user to, e.g., a Toluna dashboard webpage where a user can complete the basic registration 1202 survey previously discussed and a "share" hyperlink 1210 for earning additional virtual currency for sharing and/or posting information about the system 800 with additional users, e.g., Facebook friends, Twitter friends, or the like.

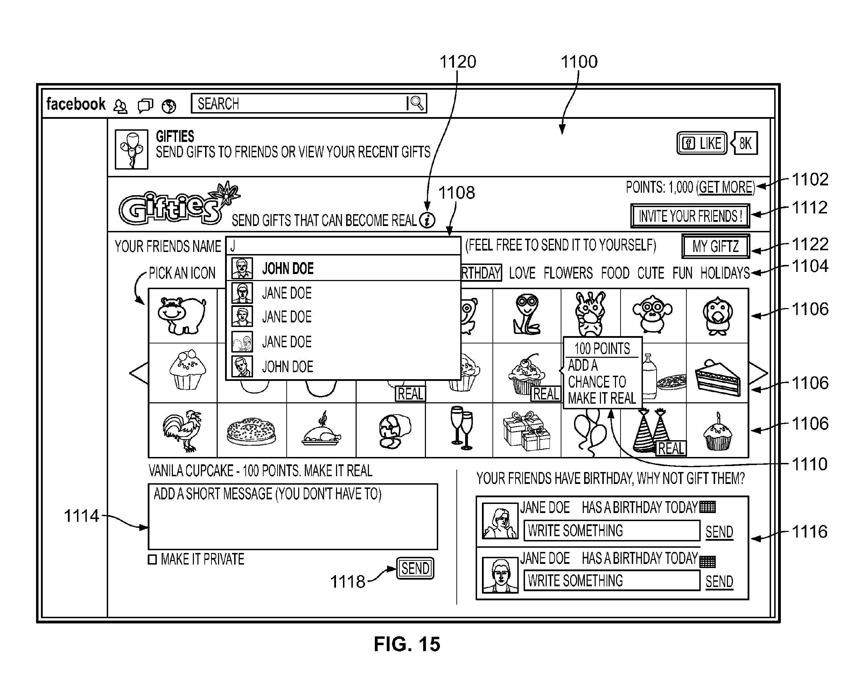

Turning now to Figure 15, the exemplary virtual store 130 is illustrated and, in particular, the implementation of the recipient selection field 1108 is depicted. As a user begins to type a recipient's name, e.g., the first letter of the first and/or last name, an automated drop-down list of recipients with the same first letter of the first name can be shown. Therefore, a user can select a recipient to whom a virtual good/service 1106 can be sent from the drop-down list of the recipient selection field 1108.

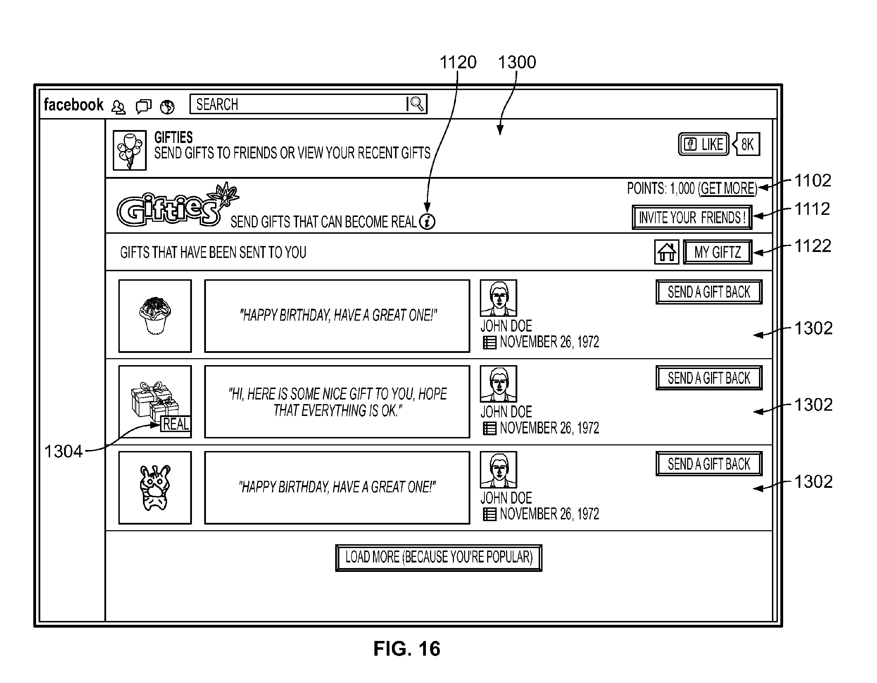

Figure 16 illustrates a "my webpage" 1300 graphical user interface when a user actuates the my webpage button 1122. In particular, "my webpage" 1300 can provide information to the user such as, e.g., all of the virtual goods/ services the user has received 1302, the sender of each virtual good/service 1106, the message attached to the virtual good/service 1106 sent, and the like. The user can further select the virtual good/service 1106 labeled as a real type of virtual good/service 1304 to determine whether the user has earned/redeemed the actual virtual good/service 1304. If the real type of virtual good/service 1304 has been redeemed, the past redemption status can be provided. If the real type of virtual good/service 1304 has not been redeemed, a redemption screen can be provided to the user for determining whether the real type of virtual good/service 1304 has been earned. Each of the virtual goods/services the user has received 1302 can further include an actuating button for sending a virtual good/service 1106 back to the sender. Actuating the button can direct the user to the virtual store 130 and preselects the specific sender as the recipient of the virtual good/service 1106.

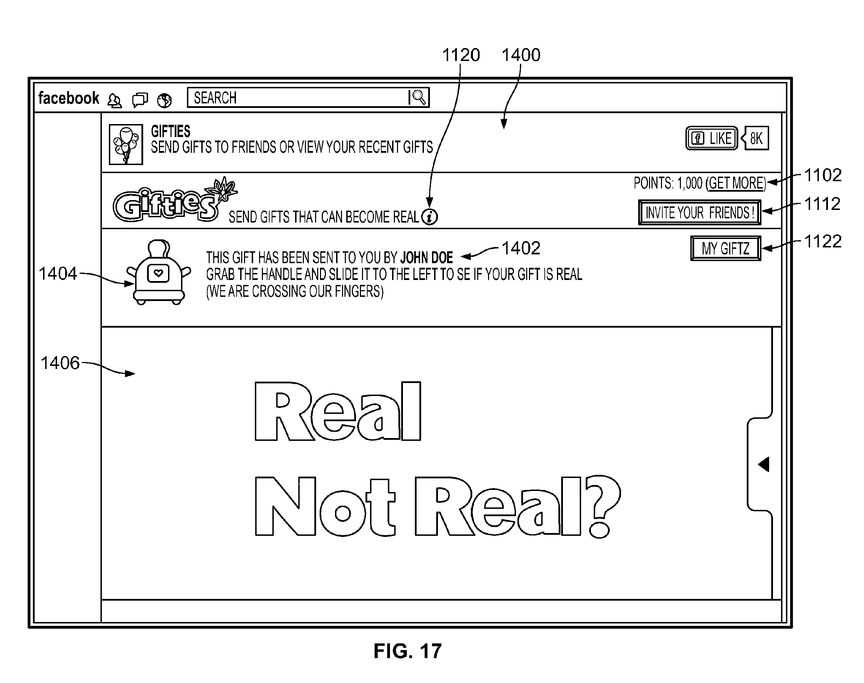

An exemplary redemption screen 1400 is illustrated in Figure 17, generally including a sender indicator 1402, a virtual good/service indicator 1404, an actuator for determining redemption 1406, and the like. The sender indicator 1402 can include the name of the user who sent the virtual good/service and instructions as to how to redeem the virtual good/service, e.g., to determine if the conversion criteria has been met and an actual good/service has been earned. For example, the virtual good/service indicator 1404 in Figure 17 represents a toaster and the user is prompted to slide the handle, i.e., the actuator for determining redemption 1406, to the left to determine if the actual good/service corresponding to the virtual good/service 1106 has been earned. In general, once a user has started sliding the actuator for determining redemption 1406 in one direction, the user will not be able to slide the actuator for determining redemption 1406 back in the opposite direction. Further, as the user slides the actuator for determining redemption 1406, a determination of whether the conversion criteria 856 has been met can be performed and the user can be notified whether the actual good/service has been earned.

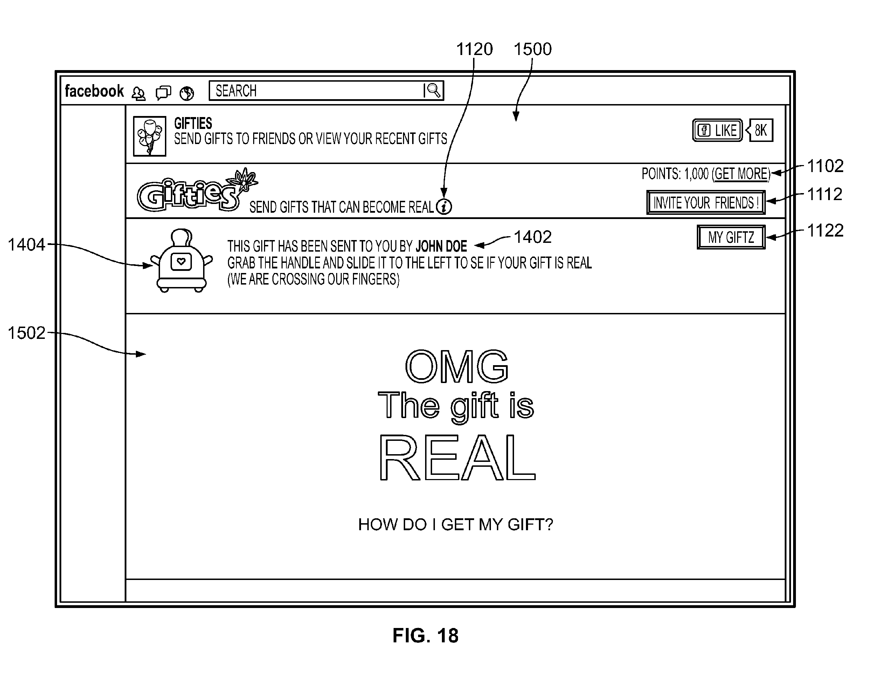

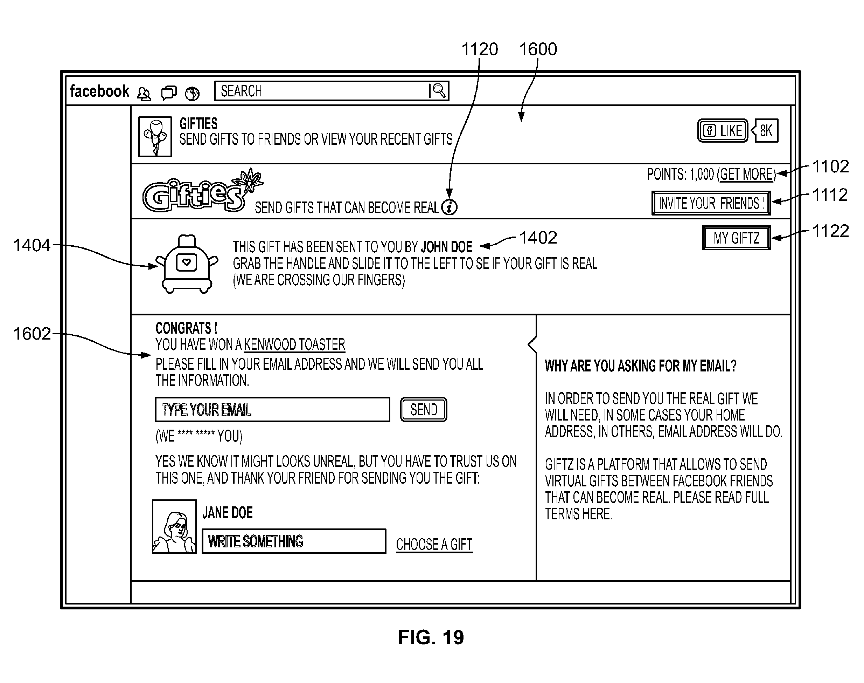

Figure 18 depicts a winning notification 1500 to a user who has met the conversion criteria 856 and has therefore earned an actual good/service corresponding to the virtual good/service 1106 sent to the user. In particular, the winning notification 1500 includes a winning message 1502 indicating that the conversion criteria 856 has been met, the actual good/service has been earned and a hyperlink to instructions on how the user is to obtain the actual good/service. For example, as illustrated by the congratulatory message 1602 of the instructions webpage 1600 in Figure 19, the user may be notified of the type of actual good/service earned, prompted to verify the user's e-mail address, shipping address, and the like, and further prompted to thank the sender who sent the user the virtual good/service 1106 by, e.g., sending a message, sending a virtual good/service 1106 in return, or the like.

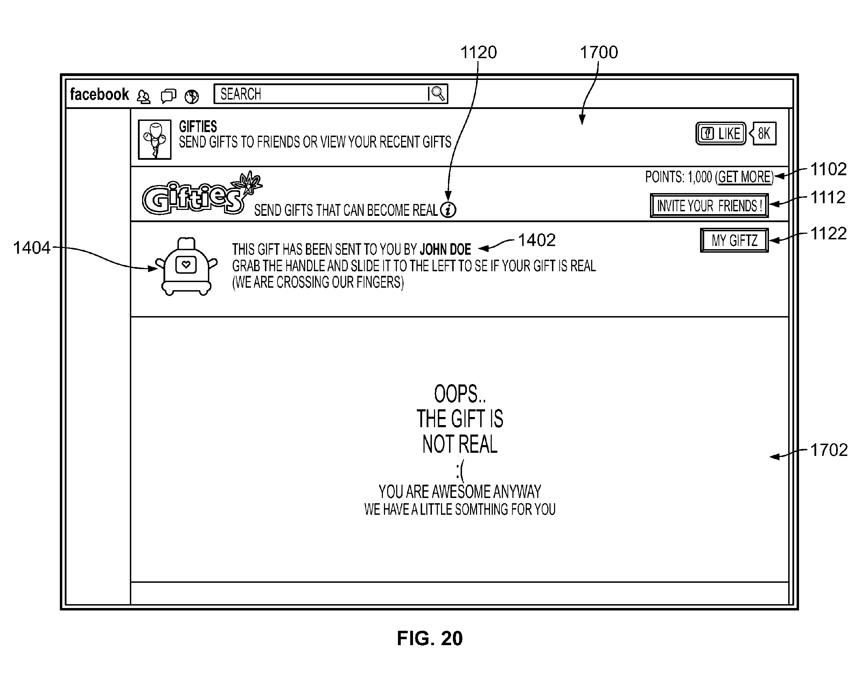

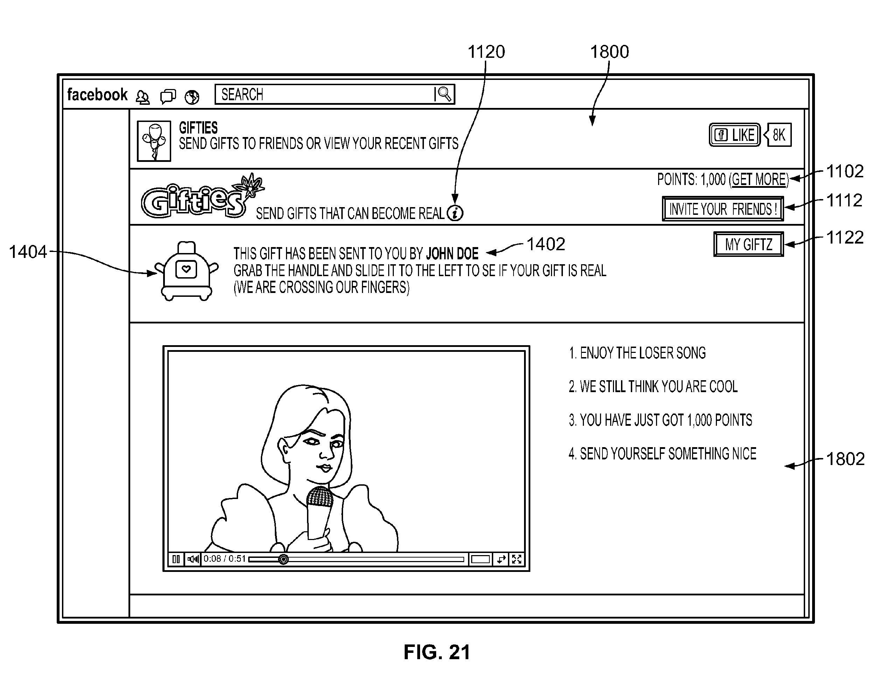

On the other hand, Figure 20 depicts a losing notification 1700, e.g., when the conversion criteria 856 has not been met and the user has not earned an actual good/service corresponding to the virtual good/service 1106 sent to the user. In particular, the losing notification 1700 includes a losing message 1702 indicating that the conversion criteria 856 has not been met, the actual good/service has not been earned and a hyperlink to, e.g., a loser video webpage. For example, as illustrated by the loser message 1802 of the loser video webpage 1800 in Figure 21, the user may be shown a video and prompted to send a gift to a recipient. Further, for a first time user, system 800 can award a predetermined amount of virtual currency to the user to encourage the user to participate in the system 800 and send virtual goods/services 1106 to additional users.

In general, the virtual good/service 1106 can be, e.g., a "free" virtual good/service 1106 which does not require virtual currency to send or purchase, a "fee" virtual good service 1106 which requires a predetermined virtual currency amount for purchasing and/or sending, and a "real" virtual good/service 1106 which can become an actual good/service if a conversion criteria 856 has been met. Further, the virtual good/service 1106 conversion criteria 856 can include, e.g., a "virtual stock" of the virtual good/service 1106, a "real stock" of the actual virtual good/service corresponding to a real type of virtual good/service 1106, the creation date, end of life date, virtual currency price, actual price, a minimum giveaway period, an image, a real description, and the like.

Therefore, as discussed in the present disclosure, a Facebook user can generally authorize the exemplary system 800 to access the user's information, e.g., e-mail, first name, last name, age, gender, address, publishing rights, friends list, private messaging rights, and the like. The new user can then be enrolled in the exemplary system 800 and can receive a welcome message/e-mail indicating the opportunity to opt in to surveys. If the user is determined to be an existing user by, e.g., an e-mail match, the user's virtual currency point balance can become the active virtual currency point balance and both the new and previous users can receive a one-time bonus of a predetermined number of virtual currency points. As described above, the user can select a virtual good/service 1106 from a virtual store 130, select a recipient, e.g., another user or the user sending the virtual good/service 1106, can include either a public and/or private massage to the recipient, and purchases the virtual good/service 1106 with virtual currency. If the system 800 determines that the user does not possess a sufficient amount of virtual currency, the user can be notified accordingly and prompted to earn more points to proceed with obtaining the virtual good/service 1106 of interest.

Once the virtual good/service 1106 has been sent to the recipient, the recipient generally receives an alert, i.e., a notification, indicating that a virtual good/service 1106 has been received. For example, when a virtual good/service 1106 is sent publicly, a Facebook recipient can be notified by, e.g., a wall post with a hyperlink to accept the virtual good/service 1106. When a virtual good/service 1106 has been sent privately, a Facebook recipient can be notified by, e.g., a private message with a hyperlink to accept the virtual good/service 1106. If the virtual good/service 1106 has been purchased by the sender through a platform other than Facebook, a hyperlink can direct the recipient to the virtual good/service 1106 originating platform, e.g., the Toluna webpage and/or the Facebook webpage for system 800. The recipient can then be prompted to authorize the system 800 to access the recipient's information and approve the virtual good/service 1106, thereby enrolling the recipient in the system 800 and performing substantially similar operations described above with respect to new and existing users of system 800. If the virtual good/service 1106 is eligible to be earned as an actual good/service, the recipient can be prompted to determine whether the conversion criteria 856 has been met and the actual good/service has been earned on the redemption screen 1400.

If the virtual good/service 1106 is not a real type of virtual good/service 1106 and the conversion criteria 856 has been met, the recipient can receive a virtual gift and can be prompted to authorize a sharing of the winning notification on, e.g., the recipient's Facebook wall. If the virtual good/service 1106 is a real type of virtual good/service 1106, the redemption screen 1400 can initiate the determination of whether the conversion criteria 856 has been met by, e.g., implementing the probability generator 820 and the hedge function described above. If the conversion criteria 856 has been met for a real type of virtual good/service 1106, the recipient can be prompted to confirm the shipment address, a winning notification 1500 by email can be provided, and the recipient can be prompted to authorize a publication on, e.g., a Facebook wall of the recipient, indicating that the recipient has earned an actual good/service. If the conversion criteria 856 has not been met for a real type of virtual good/service 1106, the recipient can be issued a losing notification 1700 and can receive a one-time predetermined award of a virtual currency amount, e.g., 1,000 Facebook credits. The user, e.g., sender and/or recipient, can further earn addition points on the earn points webpage 1200, i.e., graphical user interface, and can view virtual goods/services 1106 sent and received in "my webpage" 1300.

A Toluna user can participate in system 800 in a substantially similar manner as described above, including obtaining a virtual good/service 1106 from a virtual store 130. In particular, the virtual store 130 can also include a plurality of virtual goods/services 1106 organized by a category 1104, e.g., latest, featured, popular, or the like, a scrolling ability by clicking on the arrows on the side of the webpage to view additional virtual goods/services 1106, and a virtual good/service display 1110 for obtaining detailed information about the virtual good/service 1106 of interest. The user can further select a recipient, e.g., a Toluna follower, a Facebook friend, or the like, from the recipient selection field 1108 and can be notified when the virtual good/service 1106 has been sent. If the user is not connected to Facebook at the time of sending the virtual good/service 1106, the user can be prompted to authorize access to the Facebook friends list of the user. Optionally, the user can input an e-mail address to send a virtual good/service 1106 to rather than selecting a specific recipient from a list. Further, the notifications of sent virtual good/service 1106 can be a site notification, e.g., a Toluna webpage notification sent with a hyperlink, an email notification, if preferred and/or indicated by the user, with a hyperlink, a profile wall post, e.g., a post on the user's public wall with a hyperlink, and a Facebook wall post, e.g., if the recipient is a Facebook friend the notification can be posted on the recipient's Facebook wall.

Actuating any of the hyperlinks described in the variety of notifications can direct the recipient to the redemption screen 1400 for a real type of virtual good/service 1106 and/or an informational screen for a non-real type of virtual good/ service 1106. If the recipient is the same as the sender of the virtual good/service 1106, the recipient can be automatically directed to the redemption screen 1400. If the recipient has been input by an e-mail address only, the recipient can similarly receive an e-mail notification including a hyperlink to the redemption screen 1400 and, if the recipient is a new user, the recipient can be required to register with the system 800 prior to redeeming the virtual good/service 1106. The redemption screen 1400 functions substantially similarly as previously discussed with respect to Figure 17 and if the recipient has earned an actual good/service, the result can be published on, e.g., the recipient's Toluna or Facebook wall.

In addition, when a user receives a virtual good/service 1106, it can be automatically added to "my webpage" 1300 of the user. If the recipient of a virtual good/service 1106 is viewing the virtual good/service 1106 on his/her own "my webpage" 1300, the recipient can select any of the virtual goods/services 1106 on "my webpage" 1300. If the virtual good/service 1106 is of the real type of virtual good/service 1106 but has not been redeemed, the recipient can either send the virtual good/service 1106 to another user or redeem the virtual good/service 1106. If the virtual good/service 1106 is of the real type and has been redeemed or of the non-real type of virtual good/service 1106, the recipient can be prompted to purchase another virtual good/service 1106 and/or send a virtual good/service 1106 to another user. Substantially similar options are provided to a user viewing a hyperlink of a virtual good/service 1106 on his/her wall, e.g., Facebook or Toluna wall. If a user is viewing the virtual good/service 1106 on another user's "my webpage" 1300, selecting the virtual good/service 1106 of interest can prompt the user to purchase his/her own virtual good/service 1106 or to purchase a virtual good/service 1106 for another user. Substantially similar options are provided to a user viewing a hyperlink of a virtual good/service 1106 on another user's wall, e.g., Facebook or Toluna wall.

While exemplary embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the spirit and scope of the invention.

**Claims**

1. A system for determining availability of an actual good or service, the system comprising:

   a computer storage device to store information related to at least one of a conversion criteria and at least one virtual icon parameter of a virtual icon on at least one website; and
   a processing device to assign the at least one virtual icon parameter of or with respect to a virtual icon on at least one webpage and determining whether a conversion criteria has been satisfied based on the at least one virtual icon parameter,
   wherein availability of an actual good or service corresponding to the virtual icon is based on satisfaction of the conversion criteria.

2. The system of claim 1, wherein the at least one virtual icon is a widget having at least one of a count parameter and an elapsed time parameter, and determining whether the conversion criteria has been satisfied comprises comparing at least one of the count parameter and the elapsed time parameter to the conversion criteria.

3. The system of claim 1, wherein the at least one virtual icon parameter comprises a vote for the virtual icon.

4. The system of claim 3, wherein selection of the virtual icon requires a remuneration of virtual currency before the selection is applied to the conversion criteria.

5. The system of claim 1, wherein the at least one virtual icon parameter comprises a quantity of time that the virtual icon has been enabled.

6. The system of claim 1, wherein the conversion criteria comprises a threshold quantity of votes to be received by the widget.

7. The system of claim 1, wherein the virtual icon is a widget having at least one of a count parameter and an elapsed time parameter, and determining whether the conversion criteria has been satisfied comprises comparing at least one of the count parameter and the elapsed time parameter to the conversion criteria.

8. The system of claim 1, wherein the at least one virtual icon parameter comprises at least one of a vote for the virtual icon by a visitor to the website and a quantity of time that the virtual icon has been available for voting.

9. The system of claim 1, wherein the conversion criteria comprises at least one of a threshold quantity of votes to be received by the widget and a threshold quantity of time the widget has been available for voting.

10. A computer-implemented method of determining an availability of an actual good or service, the method comprising:

    assigning a conversion criteria to a virtual icon to be displayed on at least one webpage, the conversion criteria being associated with a probability of a specified outcome occurring in response to a random event;
    determining whether the conversion criteria has been satisfied based on whether the specified outcome has occurred;
    increasing the probability of the specified outcome occurring when the conversion criteria has not been satisfied; and
    decreasing the probability of the specified outcome occurring when the conversion criteria has been satisfied, wherein an actual good or service corresponding to the virtual icon is earned based on satisfaction of the conversion criteria

11. The computer-implemented method of claim 10, wherein the random event includes drawing a random value from a set of values, and the specified outcome is one of the values in the set

12. The computer-implemented method of claim 10, wherein the set of values includes a range of consecutive integers between 1 and N/n.

13. The computer-implemented method of claim 12, wherein N is the cost of buying and shipping the actual good or service and n is the cost of the virtual icon.

14. The computer-implemented method of claim 10, wherein increasing and decreasing the probability comprises computing an output of a hedge function using at least one virtual icon parameter.

15. The computer-implemented method of claim 14, wherein the hedge function is defined by the following mathematical expression:

$$p(draw) = 2 * hedge(CurrGain) * \left( \frac{n}{Cost} \right) = \frac{2 * n}{\left( Cost * \left( 1 + e^{-5\left( \frac{CurrGain - Cost}{MaxLoss} \right)} \right) \right)},$$

wherein *n* is the cost of the virtual icon, *Cost* is a cost of buying and shipping the actual good or service plus a desired margin, *CurrGain* is a current loss or gain for the virtual icon, and *MaxLoss* is a maximum loss.

FIG. 1

EP 2 620 904 A1

200

**COMPUTING DEVICE**

202

PROCESSING DEVICE

204

**STORAGE**

SYSTEM

100

206

I/O DEVICES

208

NETWORK INTERFACE

**FIG. 2**

300

311

SERVER

312

SERVER

320

CLIENT

310

SERVER

CLIENT

321

CLIENT

322

COMMUNICATION NETWORK

330

DATABASE

330

DATABASE

350

**FIG. 3**

400 — PROVIDE VIRTUAL STORE HAVING VIRTUAL GOOD AND/OR SERVICE ICONS

402 — RECEIVE REQUEST FOR AN ICON FROM AN ENTITY

404 — PROVIDE ENTITY WITH THE ICON IN EXCHANGE FOR A QUANTITY OF VIRTUAL CURRENCY AND ACTIVATE THE ICON

406 — MONITOR ACTIVITY OF THE ICON AFTER ACTIVATION

408 — DETERMINE WHETHER ICON HAS EXPIRED

410 — EXPIRED ? — YES → 412 — IDENTIFY ICON AS EXPIRED

NO

414 — DETERMINE WHETHER A CONVERSION CRITERIA ASSOCIATED WITH THE ICON HAS BEEN SATISFIED

416 — NO ← CRITERIA SATISFIED ?

YES

418 — INFORM ENTITY THAT THE CONVERSION CRITERIA HAS BEEN SATISFIED AND/OR THAT THE GOOD OR SERVICE IS AVAILABLE

**FIG. 4**

**500**

**502**

SEARCH [                    ]

504

**CONSUMER ELECTRONICS**

504

**CLOTHING**

504

**VACATIONS**

506

506

MP3 PLAYERS
TVS
LAPTOPS
TABLETS
MORE...

HAND BAGS
SHOES
SHIRTS
PANTS
DRESSES
MORE ...

CARIBBEAN CRUISES
MEDITERRANEAN CRUISES
EUROPEAN ADVENTURES
MORE ...

506

[ MORE CATEGORIES ]

**FIG. 5**

**600**

**REQUEST FOR PERMISSION**

TOLUNA VIRTUAL*REAL* IS REQUESTING PERMISSION TO DO THE FOLLOWING

📖 ACCESS MY BASIC INFORMATION

602

✉ SEND ME EMAIL

☑ POST TO MY WALL

604

☐ ACCESS POSTS IN MY NEWS FEED

👤 ACCESS MY PHOTOS AND VIDEOS

👥 ACCESS MY FRIENDS' INFORMATION

606   608

[ ALLOW ]  [ DON'T ALLOW ]

LOGGED IN AS FRANK SMAD**(N****)

**FIG. 6**

700

WALL

FREDERIC PETIT

702

708

TOLUNA VIRTUAL*REAL*

FREDERIC BOUGHT A COW VIRTUALREAL
FROM TOLUNA.

A VIRTUALREAL IS A WIDGET THAT CAN TURN TO
REALITY IF ENOUGH PEOPLE VOTE ON IT. YOU BUY
A VIRTUALREAL AND YOU FRIENDS VOTE
CAN MAKE IT REAL FOR YOU.

MAKE IT REAL! AND GET A STUFFED COW FOR
FREDERIC.              706
GET A VIRTUALREAL COW FOR YOURSELF!

MARCH 23 @ 3:00 PM  LIKE • COMMENT • SHARE
              704

FREDERIC
A MUST JA**** ON KADHAH

FREDERIC
**********************************

FIG. 7

**800**

**FIG. 8**

FIG. 9

EP 2 620 904 A1

1000

PROVIDE VIRTUAL STORE HAVING VIRTUAL GOOD
AND/OR SERVICE ICONS

1002

RANDOMLY ASSIGN NUMBER BETWEEN 1 AND
N/n AS PREDETERMINED "WINNING" NUMBER
FOR EACH VIRTUAL GOOD AND/OR SERVICE

1004

RECEIVE REQUEST FOR AN ICON FROM AN ENTITY

1006

PROVIDE ENTITY WITH THE ICON IN EXCHANGE
FOR A QUANTITY OF VIRTUAL CURRENCY AND
ACTIVATE THE ICON

1008

DRAW A RANDOM NUMBER BETWEEN 1 AND
N/n FOR ENTITY OBTAINING THE ICON

1010

DETERMINE WHETHER THE RANDOM NUMBER
DRAWN IS EQUAL TO THE PREDETERMINED
"WINNING" NUMBER

1012

EQUAL
?

NO

YES

1020

ENTITY LOSES

1014

ENTITY WINS

1022

INFORM ENTITY IT HAS LOST

1016

INFORM ENTITY IT HAS WON
AND/OR THAT THE GOOD OR
SERVICE IS AVAILABLE

1024

INCREASE CURRGAIN BY n

1018

DECREASE CURRGAIN BY N

**FIG. 10**

FIG. 11

**FIG. 12**

FIG. 13

FIG. 14

EP 2 620 904 A1

**FIG. 15**

FIG. 16

EP 2 620 904 A1

FIG. 17

facebook

SEARCH

GIFTIES
SEND GIFTS TO FRIENDS OR VIEW YOUR RECENT GIFTS

LIKE  8K

Gifties
SEND GIFTS THAT CAN BECOME REAL (i)

POINTS: 1,000 (GET MORE) ← 1102

INVITE YOUR FRIENDS ! ← 1112

THIS GIFT HAS BEEN SENT TO YOU BY **JOHN DOE** ← 1402
GRAB THE HANDLE AND SLIDE IT TO THE LEFT TO SE IF YOUR GIFT IS REAL
(WE ARE CROSSING OUR FINGERS)

MY GIFTZ ← 1122

OMG
The gift is
REAL

HOW DO I GET MY GIFT?

1120   1500

1404

1502

EP 2 620 904 A1

34

**FIG. 18**

FIG. 19

EP 2 620 904 A1

facebook ♟ ⬭ 🌐  | SEARCH  🔍 |

**GIFTIES**
SEND GIFTS TO FRIENDS OR VIEW YOUR RECENT GIFTS — 1700

🏷 LIKE ⟨8K⟩

**Gifties**  SEND GIFTS THAT CAN BECOME REAL ⓘ — 1120

POINTS: 1,000 (GET MORE) — 1102

INVITE YOUR FRIENDS! — 1112

THIS GIFT HAS BEEN SENT TO YOU BY **JOHN DOE** — 1402
GRAB THE HANDLE AND SLIDE IT TO THE LEFT TO SE IF YOUR GIFT IS REAL
(WE ARE CROSSING OUR FINGERS) — 1404

MY GIFTZ — 1122

OOPS..
THE GIFT IS
NOT REAL
:(
YOU ARE AWESOME ANYWAY
WE HAVE A LITTLE SOMTHING FOR YOU

— 1702

**FIG. 20**

FIG. 21

EP 2 620 904 A1

Europäisches
Patentamt
European
Patent Office
Office européen
des brevets

# EUROPEAN SEARCH REPORT

Application Number

EP 13 15 1130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC, namely a business and/or gaming scheme.The information technology employed as an enabler for carrying out said processes, i.e. a general-purpose computer network, is conventional. Its use for carrying out non-technical processes forms part of common general knowledge and it was widely available to everyone at the date of priority of the present application (2012).No documentary evidence is therefore considered necessary. (See Official Journal EPO 11/2007, pages 592ff and 594ff).<br><br>----- | | INV.<br>G06Q30/02 |

TECHNICAL FIELDS
SEARCHED      (IPC)

G06Q

The present search report has been drawn up for all claims

| Place of search | Date of completion of the search | Examiner |
|---|---|---|
| Munich | 19 June 2013 | Reino, Bernardo |

EPO FORM 1503 03.82 (P04C01)